(19) Europäisches Patentamt
European Patent Office
Office européen des brevets

(11) **EP 4 105 837 A1**

(12) **EUROPEAN PATENT APPLICATION**

(43) Date of publication:
**21.12.2022 Bulletin 2022/51**

(21) Application number: **22179185.8**

(22) Date of filing: **15.06.2022**

(51) International Patent Classification (IPC):
**G06N 3/04** (2006.01)          **G06N 5/00** (2006.01)

(52) Cooperative Patent Classification (CPC):
**G06N 3/0445; G06N 3/0472; G06N 5/003**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 US 202163212554 P**
**07.06.2022 JP 2022092512**

(71) Applicant: **FUJITSU LIMITED**
**Kawasaki-shi, Kanagawa 211-8588 (JP)**

(72) Inventors:
• **Bagherbeik, Mohammad**
**Toronto, Ontario, M5S 1A1 (CA)**
• **Sheikholeslami, Ali**
**Toronto, Ontario, M5S 1A1 (CA)**

(74) Representative: **Hoffmann Eitle**
**Patent- und Rechtsanwälte PartmbB**
**Arabellastraße 30**
**81925 München (DE)**

(54) **COMPUTER PROGRAM, DATA PROCESSING APPARATUS, AND DATA PROCESSING METHOD**

(57) A storage unit stores a flow matrix representing the flows between a plurality of entities to be assigned to a plurality of destinations, and a distance matrix representing the distances between the plurality of destinations. A processing unit calculates a first change in an evaluation function, which is to be caused by a first assignment change of exchanging the destinations of first and second entities among the plurality of entities, with vector arithmetic operations based on the flow and distance matrices, determines based on the first change whether to accept the first assignment change, and when determining to accept the first assignment change, updates an assignment state and updates the distance matrix by swapping the two columns or two rows (two columns in the example of FIG. 2) of the distance matrix corresponding to the first and second entities.

FIG. 1

**Description**

FIELD

The embodiment discussed herein relates to a computer program, a data processing apparatus, and a data processing method.

BACKGROUND

Assignment problems are a class of NP-hard combinatorial optimization problems with a wide range of real-world applications such as vehicle routing and field-programmable gate array (FPGA) block placement. Quadratic assignment problem (QAP) is an example of the assignment problems (see Eugene L. Lawler, "The quadratic assignment problem", Management Science, Vol.9, No.4 pp.586-599, July 1963, for example).

The QAP aims to find, when a set of n entities (facilities or others) is to be assigned to a set of n destinations (locations or others), an assignment that minimizes the sum of the products of flows (costs for transporting goods between the facilities) between the entities and distances between the destinations respectively assigned to the entities. That is, the QAP is a problem to search for an assignment that minimizes the value of an evaluation function defined by equation (1). The evaluation function evaluates the cost of an assignment state and is also called a cost function or the like.

$$C(\phi) = \sum_{i=1}^{n} \sum_{j=1}^{n} f_{i,j} d_{\phi(i),\phi(j)} \tag{1}$$

In equation (1), $f_{i,j}$ denotes the flow between the entities with identification numbers (hereinafter, referred to as IDs, simply) = i and j, and $d_{\varphi(i),\varphi(j)}$ denotes the distance between the destinations assigned to the entities with IDs = i and j.

By the way, there are Boltzmann machines (also called Ising devices) using an Ising-type evaluation function as devices that solve large-scale discrete optimization problems, which von Neumann computers are ill-equipped to handle. The Boltzmann machines are a type of recurrent neural network.

A Boltzmann machine transforms a combinatorial optimization problem into an Ising model that expresses the behavior of magnetic spins. The Boltzmann machine then finds a state of the Ising model that minimizes the value of an Ising-type evaluation function using a Markov-chain Monte Carlo method with simulated annealing, parallel tempering (see Robert H. Swendsen and Jian-Sheng Wang, "Replica Monte Carlo simulation of spin-glasses", Physical Review Letters, Vol.57, No.21, pp.2607-2609, November 1986, for example), or another (see K. Dabiri, et al., "Replica Exchange MCMC Hardware With Automatic Temperature Selection and Parallel Trial", IEEE Transactions on Parallel and Distributed Systems, Vol.31, No.7, pp.1681-1692, July 2020, for example). The value of the evaluation function corresponds to energy. Using the evaluation function with the signs changed; plus changed to minus or minus to plus, the Boltzmann machine may be designed to find a state that maximizes the value of the evaluation function. The state of the Ising model is represented by a combination of the values of a plurality of state variables (also called neuron values). Here, each state variable may have a value of 0 or 1.

For example, the Ising-type evaluation function is defined by equation (2).

$$E(\mathbf{S}) = -\frac{1}{2} \sum_{i=1}^{N} \sum_{j=i}^{N} s_i s_j w_{i,j} - \sum_{i=1}^{N} s_i b_i \tag{2}$$

The first term of the right side is the sum of the products of the values (0 or 1) of two state variables selected from N state variables and a weight value (representing the intensity of interaction between the two state variables) over all combinations of all state variables of the Ising model without omission or repetition. In this first term, $s_i$ denotes a state variable with ID = i, $s_j$ denotes a state variable with ID = j, and $w_{i,j}$ denotes a weight value representing the intensity of interaction between the state variables with IDs = i and j. The second term of the right side is the sum of the products of state variables and bias coefficients of the IDs, where $b_i$ denotes a bias coefficient for ID = i.

A change in energy ($\Delta E_i$) based on a change in the $s_i$ value is given by equation (3).

$$\Delta E_i = -\Delta s_i \left( \sum_j W_{ij} s_j + b_i \right) = -\Delta s_i h_i \qquad (3)$$

In equation (3), $\Delta s_i$ becomes -1 when $s_i$ is changed from 1 to 0, whereas $\Delta s_i$ becomes 1 when $s_i$ is changed from 0 to 1. $h_i$ is called a local field, and $\Delta E_i$ is calculated by multiplying $h_i$ by a sign (+1 or -1) that depends on $\Delta s_i$.

For example, the following process is repeated: if $\Delta E_i$ is less than a noise value (also called a thermal noise) obtained based on a random number and temperature parameter value, the $s_i$ value is updated to cause a state transition, and the local fields are updated accordingly.

Techniques for solving QAP using such a Boltzmann machine have been proposed (see U.S. Patent Application Publication No. 2021/0326679 and M. Bagherbeik et al., "A permutational Boltzmann machine with parallel tempering for solving combinatorial optimization problems", In International Conference on Parallel Problem Solving from Nature, pp.317-331, Springer, 2020, for example).

An Ising-type evaluation function for the QAP is defined by equation (4).

$$E = \frac{1}{2} x^T W x \qquad (4)$$

In equation (4), x is a vector of state variables and represents the state of assignment of n entities to n destinations. $x^T$ is represented as $(x_{1,1}, ..., x_{1,n}, x_{2,1}, ..., x_{2,n}, ..., x_{n,1}, ..., x_{n,n})$. $x_{i,j} = 1$ indicates that an entity with ID = i is assigned to a destination with ID = j, and $x_{i,j} = 0$ indicates that an entity with ID = i is not assigned to a destination with ID = j.

W is a matrix of weight values and is given by equation (5) using the above-described flows ($f_{i,j}$) and a distance matrix D between the n destinations.

$$W = \begin{pmatrix} f_{1,1}D & f_{1,2}D & \cdots & f_{1,n}D \\ f_{2,1}D & f_{2,2}D & \cdots & f_{2,n}D \\ \vdots & \vdots & \ddots & \vdots \\ f_{n,1}D & f_{n,2}D & \cdots & f_{n,n}D \end{pmatrix} \qquad (5)$$

See also, for example, the following documents:

Rainer E. Burkard, Stefan E. Karisch, and Franz Rendl, "QAPLIB - a quadratic assignment problem library", Journal of Global optimization, 10(4), pp.391-403, 1997

Gintaras Palubeckis, "An algorithm for construction of test cases for the quadratic assignment problem", Informatica, Lith. Acad. Sci., Vol.11, No.3, pp.281-296, 2000

Zvi Drezner, Peter M. Hahn, and Eric D. Taillard, "Recent advances for the quadratic assignment problem with special emphasis on instances that are difficult for meta-heuristic methods", Annals of Operations research, 139(1), pp.65-94, 2005

Allyson Silva, Leandro C. Coelho, and Maryam Darvish, "Quadratic assignment problem variants: A survey and an effective parallel memetic iterated tabu search", European Journal of Operational Research, 2020

Danny Munera, Daniel Diaz, and Salvador Abreu, "Hybridization as cooperative parallelism for the quadratic assignment problem", In Hybrid Metaheuristics, pp. 47-61, Springer International Publishing Switzerland, 2016

Kresimir Mihic, Kevin Ryan, and Alan Wood, "Randomized decomposition solver with the quadratic assignment problem as a case study", INFORMS Journal on Computing, Vol.30, No.2, pp.295-308, 2018

Techniques for solving QAP using an evaluation function as described above, however, need a large number of iterations of processes including calculations of a change in energy and updating of local fields, which involve a large number of memory accesses; thus, a considerable amount of time is needed.

SUMMARY

According to one aspect, the present disclosure intends to provide a computer program, data processing apparatus, and data processing method to solve assignment problems at high speed.

According to one aspect, there is provided a computer program that causes a computer to perform a process of finding a solution to an assignment problem with local search using an evaluation function representing a cost of an assignment state, the process including: calculating a first change in the evaluation function using a vector arithmetic operation based on a flow matrix and a distance matrix stored in a memory, the flow matrix representing flows between a plurality of entities to be assigned to a plurality of destinations, the distance matrix representing distances between the plurality of destinations, the first change being to be caused by a first assignment change of exchanging destinations of a first entity and a second entity among the plurality of entities; determining based on the first change whether to accept the first assignment change; and updating, upon determining to accept the first assignment change, the assignment state and updating the distance matrix by swapping two columns or two rows of the distance matrix corresponding to the first entity and the second entity.

BRIEF DESCRIPTION OF DRAWINGS

FIG. 1 illustrates an example of solving a quadratic assignment problem (QAP);
FIG. 2 illustrates an example of reordering a distance matrix in solving QAP and an example of a data processing apparatus;
FIG. 3 illustrates an example of calculation of updating a cache matrix;
FIG. 4 illustrates an example of a solver system that performs parallel tempering;
FIG. 5 illustrates an example of an algorithm for solving QAP with local search using parallel tempering;
FIG. 6 is a flowchart illustrating the entire process of local search using parallel tempering;
FIG. 7 is a flowchart illustrating an example of a replica initialization process for the QAP;
FIG. 8 is a flowchart illustrating an example of a replica search process for the QAP;
FIG. 9 illustrates an example of an algorithm for solving a quadratic semi-assignment problem (QSAP) with local search using parallel tempering;
FIG. 10 is a flowchart illustrating an example of a replica initialization process for the QSAP;
FIG. 11 is a flowchart illustrating an example of a replica search process for the QSAP;
FIG. 12 illustrates an evaluation result of calculation speed-ups of SAM and BM$ methods relative to a V$\triangle$C method;
FIG. 13 illustrates an evaluation result of speed-ups achieved by vector operations relative to scalar operations;
FIG. 14 illustrates an example of load balancing;
FIG. 15 illustrates an evaluation result of computational speed-ups achieved by the load balancing;
FIG. 16 illustrates an example of a measurement algorithm;
FIG. 17 illustrates relative speed-ups measured between the V$\triangle$C, SAM, and BM$ methods and memory tier occupancy based on problem size;
FIG. 18 illustrates an example of a $\triangle$C generation circuit;
FIG. 19 illustrates a first example of a hardware configuration for column swapping;
FIG. 20 illustrates an example of the column swapping;
FIG. 21 illustrates a second example of the hardware configuration for the column swapping;
FIG. 22 illustrates a first variant of the second example of the hardware configuration for the column swapping;
FIG. 23 illustrates a second variant of the second example of the hardware configuration for the column swapping;
FIG. 24 illustrates a third example of the hardware configuration for the column swapping;
FIG. 25 illustrates a variant of the third example of the hardware configuration for the column swapping;
FIG. 26 illustrates another example of the $\triangle$C generation circuit;
FIG. 27 illustrates an example of a hardware configuration for allowing two replicas to run;
FIG. 28 illustrates another example of the $\triangle$C generation circuit;
FIG. 29 illustrates an example of a replica processing circuit;
FIG. 30 illustrates an example of a replica processing circuit that is used for solving QAP with asymmetric matrices; and
FIG. 31 illustrates an example of hardware of a computer that is an example of the data processing apparatus.

DESCRIPTION OF EMBODIMENTS

Hereinafter, one embodiment will be described with reference to the accompanying drawings.

A data processing apparatus of the present embodiment finds a solution to a quadratic assignment problem (QAP) or a quadratic semi-assignment problem (QSAP) as an example of assignment problems, with local search. The following describes the QAP, QSAP, and local search.

(QAP)

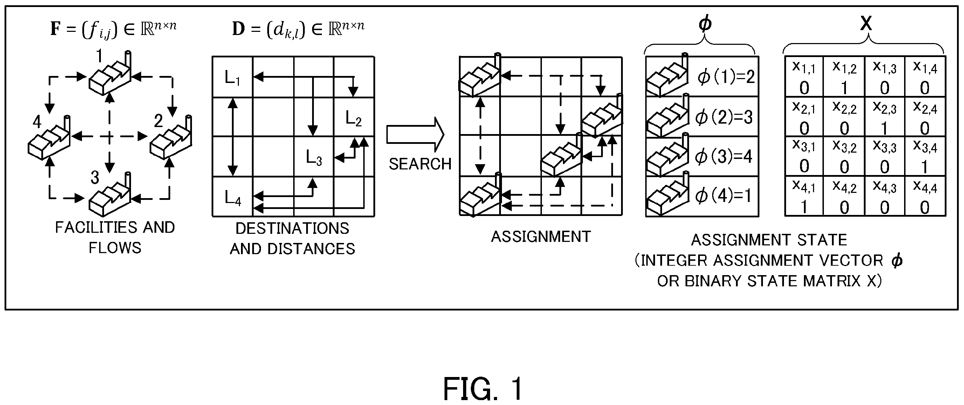

FIG. 1 illustrates an example of solving QAP. The QAP is a problem to find, when a set of n entities (facilities or others) is assigned to a set of n destinations (locations or others), an assignment that minimizes the sum of the products of flows between the entities and distances between the destinations respectively assigned to the entities.

In the example of FIG. 1, four facilities given identification numbers (hereinafter, referred to as IDs, simply) 1 to 4 are assigned to four destinations ($L_1$ to $L_4$).

A flow matrix representing the flows between the n entities is defined by equation (6).

$$\mathbf{F} = (f_{i,j}) \in \mathbb{R}^{n \times n} \tag{6}$$

The flow matrix (F) is an n-by-n matrix, where $f_{i,j}$ denotes the flow in the i-th row and j-th column and represents the flow between the entities with IDs = i and j. For example, the flow between the facility with ID = 1 and the facility with ID = 2 in FIG. 1 is represented as $f_{1,2}$.

A distance matrix representing the distances between the n destinations is defined by equation (7).

$$\mathbf{D} = (d_{k,l}) \in \mathbb{R}^{n \times n} \tag{7}$$

The distance matrix (D) is an n-by-n matrix, where $d_{k,l}$ denotes the distance in the k-th row and 1-th column and represents the distance between the destinations with IDs = k and 1. For example, the distance between the destination ($L_1$) with ID = 1 and the destination ($L_2$) with ID = 2 in FIG. 1 is represented as $d_{1,2}$.

The QAP is solved by finding an assignment that minimizes equation (1). The state of assignment of the n entities to the n destinations is represented by an integer assignment vector φ or a binary state matrix X. The vector φ is a permutation of a set $\Phi_n$, and $\Phi_n$ is the set of all permutations of the set N = {1, 2, 3, ..., n}. A binary variable $x_{i,j}$ included in the binary state matrix X is given by equation (8).

$$x_{i,j} = \begin{cases} 1 & if \quad \phi(i) = j \\ 0 & otherwise, \quad \mathbf{X} = (x_{i,j}) \in \{0,1\}^{n \times n} \end{cases} \tag{8}$$

In the example of FIG. 1, the facility with ID = 1 is assigned to the destination with ID = 2, the facility with ID = 2 to the destination with ID = 3, the facility with ID number 3 to the destination with ID = 4, and the facility with ID = 4 to the destination with ID = 1. The integer assignment vector φ contains the following: φ(1) = 2, φ(2) = 3, φ(3) = 4, and φ(4) = 1. The binary state matrix X has a value of 1 at $x_{1,2}$, $x_{2,3}$, $x_{3,4}$, $x_{4,1}$ and a value of 0 at the others $x_{i,j}$.

QAP has two variants: symmetric where one or both of the flow matrix and distance matrix are symmetric, and asymmetric where both the flow matrix and the distance matrix are asymmetric. The present embodiment focuses on QAP with symmetric matrices (with the diagonal elements being 0 (bias-less)) as this applies to the majority of QAP instances and also simplifies the mathematical calculations. Note that QAP with symmetric matrices is directly transferable to QAP with asymmetric matrices.

(QSAP)

QSAP is a variant of QAP. In the QSAP, the number of entities and the number of destinations are not equal. For example, a plurality of entities are allowed to be assigned to each destination. In the QSAP, a distance matrix is defined by equation (9).

$$\mathbf{D} = (d_{k,l}) \in \mathbb{R}^{m \times m} \tag{9}$$

The distance matrix (D) has non-zero diagonal elements to account for intra-destination routing. In the QSAP, an additional matrix B defined by equation (10) is introduced.

$$\mathbf{B} = \left(b_{i,k}\right) \in \mathbb{R}^{n \times m} \tag{10}$$

In equation (10), $b_{i,k}$ denotes a fixed cost of assigning an entity with ID = i to a destination with ID = k.
The QSAP is solved by finding an assignment that minimizes equation (11), instead of equation (1) that is an evaluation function for QAP.

$$C^s(\mathbf{\Psi}) = \sum_{i=1}^{n} \sum_{j=1}^{n} f_{i,j} d_{\psi(i),\psi(j)} + \sum_{i=1}^{n} b_{i,\psi(i)} \tag{11}$$

A state of assignment of n entities to m destinations is represented by an integer assignment vector $\Psi$ ($\Psi \in [1, m]^n$) or a binary state matrix S. A binary variable $s_{i,j}$ included in the binary state matrix S is given by equation (12).

$$s_{i,j} = \begin{cases} 1 & if \quad \psi_i = j \\ 0 & otherwise, \end{cases} \quad \mathbf{S} = (s_{i,j}) \in \{0,1\}^{n \times m} \tag{12}$$

(Local Search)

Local search is to search for candidate solutions within the neighborhood of states that are reachable via changes of the current state. One local search method for QAP is a pairwise exchange of entities. In this technique, two entities are selected and their destinations are exchanged. The change in the evaluation function (equation (1)) resulting from the exchange of the destinations (identified by IDs = $\varphi$(a) and $\varphi$(b)) of the two entities (identified by IDs = a and b) is given by equation (13).

$$\Delta C_{ex} = \sum_{i=1, i \neq a,b}^{n} 2(f_{b,i} - f_{a,i})(d_{\phi(a),\phi(i)} - d_{\phi(b),\phi(i)}) \tag{13}$$

As seen in equation (13), the change ($\Delta C_{ex}$) is generated through a multiply-and-accumulate loop.
In the case where the local search conducts the pairwise exchange for QSAP, the change in the value of the evaluation function (equation (11)) is given by equation (14).

$$\Delta C_{ex}^s = \sum_{i=1, i \neq a,b}^{n} 2(f_{b,i} - f_{a,i})(d_{\psi(a),\psi(i)} - d_{\psi(b),\psi(i)}) \\ + \Delta B_{ex} \tag{14}$$

In equation (14), $\Delta B_{ex}$ denotes a change in the fixed cost associated with assigning the entities to each destination and is given by equation (15).

$$\Delta B_{ex} = b_{a,\psi(b)} + b_{b,\psi(a)} - b_{a,\psi(a)} - b_{b,\psi(b)} \tag{15}$$

A state space for the QSAP is not limited to only the above-described permutations representing assignment states. Entities are relocatable to a new destination, regardless of whether other entities have been assigned to the destination. A change in the value of the evaluation function for an assignment change of an entity with ID = a from its

current destination (ID = $\Psi(a)$) to a destination (ID = 1) is calculated from equations (16) and (17).

$$\Delta B_{rel} = b_{a,l} - b_{a,\psi(a)} \tag{16}$$

$$\Delta C_{rel}^s = \sum_{i=1}^{n} 2 f_{a,i}\left(d_{l,\psi(i)} - d_{\psi(a),\psi(i)}\right) + \Delta B_{rel} \tag{17}$$

On the basis of the change calculated as above, the local search determines whether to accept a proposal for the assignment change that changes the value of the evaluation function by the calculated change. For example, whether to accept the proposal is determined based on pre-defined criteria such as a greedy approach. In this greedy approach, an assignment change that decreases the cost (the value (energy) of the evaluation function) is accepted. With the greedy approach, a proposal acceptance rate (PAR) is high at the start of the search, but later tends to approach 0 as the search gets stuck in a local minimum of the evaluation function and no further improving moves are found.

Instead of the greedy approach, the present embodiment is able to use a stochastic local search algorithm such as a simulated annealing algorithm. The stochastic local search algorithm uses an acceptance probability ($P_{acc}$) of a Metropolis algorithm given by equation (18) while using a temperature parameter (T) to introduce randomness into assignment changes.

$$P_{acc} = min\{1, exp(-\Delta C/T)\} \tag{18}$$

As T increases toward infinity, $P_{acc}$ and PAR increase to where all proposals are accepted, regardless of the $\Delta C$ value. As T is lowered and approaches 0, the proposal acceptance becomes greedy, and PAR tends to become 0 as the search eventually gets stuck in a local minimum of the evaluation function.

The $\Delta C$ calculations for QAP and QSAP take up the majority of the total processing time of the data processing apparatus searching for a solution to an assignment problem.

The following vector arithmetic operations enable accelerating the $\Delta C$ calculations.

(Vectorization of $\Delta C$ Calculations)

In the following, this method is referred to as a V$\Delta$C method. The $\Delta C_{ex}$ calculation for QAP using equation (13) is easily vectorized as a dot product, if not for the condition that the calculations for i = a and b are skipped.

Therefore, the data processing apparatus of the present embodiment removes this condition in the $\Delta C_{ex}$ calculation. More specifically, the data processing apparatus iterates the multiply-and-accumulate loop over all n entities, and adds an extra product of flow and distance as a compensation term, as represented in equation (19), to compensate for the removal of the condition.

$$\Delta C_{ex} = \sum_{i=1}^{n} 2(f_{b,i} - f_{a,i})(d_{\phi(a),\phi(i)} - d_{\phi(b),\phi(i)}) \tag{19}$$
$$+ 4 f_{a,b} d_{\phi(a),\phi(b)}$$

Using a vector $\Delta F$ (equation (20)) of difference in flow and a vector $\Delta D$ (equation (21)) of difference in distance, caused by exchanging the destinations of entities with IDs = a and b, equation (19) is reformulated into equation (22) using a dot product.

$$\Delta_a^b \mathbf{F} = \mathbf{F}_{b,*} - \mathbf{F}_{a,*} \tag{20}$$

$$\Delta_{\phi(b)}^{\phi(a)}\mathbf{D}^{\mathbf{X}} = (\mathbf{D}_{\phi(a),*} - \mathbf{D}_{\phi(b),*})\mathbf{X}^{T} \qquad (21)$$

$$\Delta C_{ex} = 2\Delta_{a}^{b}\mathbf{F}\cdot\Delta_{\phi(b)}^{\phi(a)}\mathbf{D}^{\mathbf{X}} + 4f_{a,b}d_{\phi(a),\phi(b)} \qquad (22)$$

In equation (20), $\Delta^{b}_{a}F$ denotes the difference vector between the b-th and a-th rows of the flow matrix, and $F_{b,}*$ and $F_{a,}*$ indicate the b-th and a-th rows of the flow matrix, respectively.

While the elements of the vector $\Delta F$ are arranged in the order of the original flow matrix, the elements of the vector $\Delta D$ are ordered to correspond to the current assignment state. This is mathematically represented by a multiplication of the transposed matrix (denoted by $X^{T}$) of the binary state matrix X and $(D_{\varphi(a),*} - D_{\varphi(b),*})$, as represented by equation (21), where $D_{\varphi(a),*}$ and $D_{\varphi(b),*}$ indicate the a-th and b-th rows of the distance matrix, respectively.

In software, the calculation of equation (21) is achieved by reordering the elements of the vector $\Delta D$ in time proportional to the number of entities, n.

In the case of QSAP, a plurality of entities are assignable to the same destination. Therefore, a vector $(\Delta D)$ of size n is generated from an m-by-m distance matrix, as represented in equation (23).

$$\Delta_{\psi(b)}^{\psi(a)}\mathbf{D}^{\mathbf{S}} = (\mathbf{D}_{\psi(a),*} - \mathbf{D}_{\psi(b),*})\mathbf{S}^{T}, \quad \Delta_{\psi(b)}^{\psi(a)}\mathbf{D}^{\mathbf{S}} \in \mathbb{R}^{1\times n} \qquad (23)$$

The $\Delta C^{S}_{ex}$ value is calculated from equation (24) using the vector $\Delta D$ and the vector $\Delta F$ of equation (20).

$$\Delta C_{ex}^{\prime s} = 2\Delta_{a}^{b}\mathbf{F}\cdot\Delta_{\psi(b)}^{\psi(a)}\mathbf{D}^{\mathbf{S}} + 4f_{a,b}d_{\psi(a),\psi(b)}$$
$$-2f_{a,b}(d_{\psi(a),\psi(a)} + d_{\psi(b),\psi(b)}) + \Delta B_{ex} \qquad (24)$$

As the QSAP does not restrict a plurality of entities being assigned to the same destination, the additional compensation terms as represented in the second line of equation (24) are added to $\Delta C$.

In addition, the vectorized form of the $\Delta C^{S}_{rel}$ calculation for a relocation corresponding to equation (17) is given by equation (25).

$$\Delta C_{rel}^{\prime s} = 2\mathbf{F}_{a,*}\cdot\Delta_{\psi(a)}^{l}\mathbf{D}^{\mathbf{S}} + \Delta B_{rel} \qquad (25)$$

As the relocation involves the movement of a single entity to a destination only, the calculation of the vector $\Delta F$ and the compensation by the product of flow and distance are not needed.

(Reordering of Distance Matrix)

The above-described V$\Delta$C method is implementable on processors such as a plurality of central processing units (CPUs) and a plurality of graphics processing units (GPUs) with the use of single instruction/multiple data (SIMD) instructions.

Although the reordering of the elements of the vector $\Delta D$ in the V$\Delta$C method is doable in time proportional to the number of entities, n, the processing efficiency is not high as it is performed each time the $\Delta C$ calculation is made due to an exchange between the destinations of two entities, which may also need a very high computational cost.

To minimize the computational cost of generating a vector $\Delta D$ with the correct element order, the data processing apparatus of the present embodiment reorders the columns of the distance matrix according to the current assignment state. Hereinafter, this method is referred to as a state-aligned D matrix (SAM) method. In addition, in the following description, a distance matrix after the reordering is referred to as a state-aligned D matrix, denoted by $D^{X}$ for QAP and $D^{S}$ for QSAP.

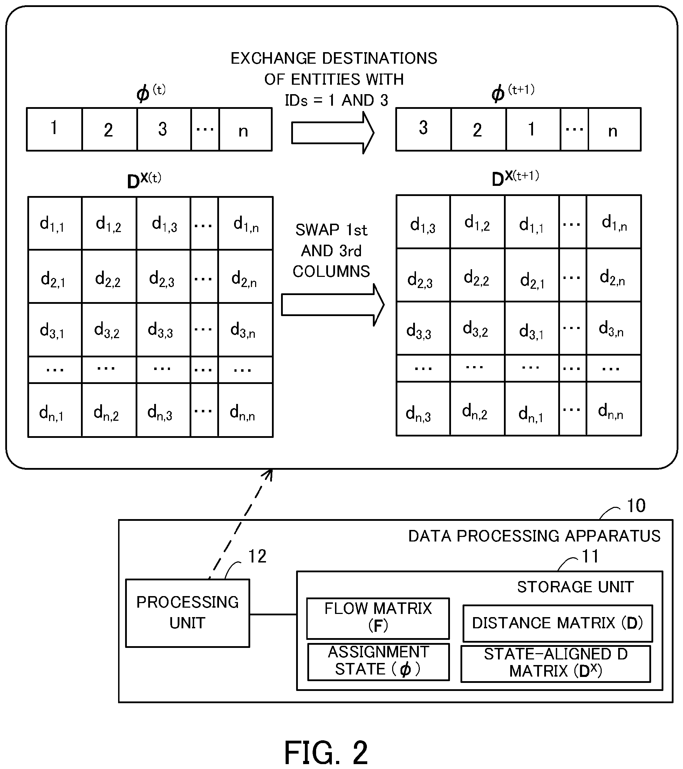

FIG. 2 illustrates an example of reordering a distance matrix in solving QAP and an example of the data processing apparatus.

The data processing apparatus 10 may be a computer, for example, and includes a storage unit 11 and a processing unit 12.

The storage unit 11 is a volatile storage device that is an electronic circuit such as a dynamic random access memory (DRAM), or a non-volatile storage device that is an electronic circuit such as a hard disk drive (HDD) or a flash memory, for example. The storage unit 11 may include an electronic circuit such as a static random access memory (SRAM).

The storage unit 11 holds programs that the computer executes for local search and others, and also holds the above-described flow matrix, distance matrix, state-aligned D matrix ($D^X$ or $D^S$), and assignment state (represented by the integer assignment vector $\varphi$ or binary state matrix X).

The processing unit 12 is implemented by a processor, which is a hardware device such as CPU, GPU, or digital signal processor (DSP). Alternatively, the processing unit 12 may be implemented by an electronic circuit such as application specific integrated circuit (ASIC) or FPGA. The processing unit 12 runs the programs stored in the storage unit 11 to cause the data processing apparatus 10 to perform local search. In this connection, the processing unit 12 may be a set of multiple processors.

The processing unit 12 repeats a process of exchanging the destinations of two entities, for example, in order to find an assignment state that minimizes the value of the evaluation function defined by equation (1) or (11). The assignment state that provides the lowest value of local minima of the evaluation function is taken as an optimal solution. In this connection, using the evaluation function defined by equation (1) or (11) with the signs changed, the processing unit 12 may be designed to find an assignment state that maximizes the value of the evaluation function (in this case, a highest value is taken as an optimal solution).

FIG. 2 illustrates an example of reordering a distance matrix in solving QAP. An assignment state at time step t and a state-aligned D matrix corresponding to the assignment state are denoted by $\varphi^{(t)}$ and $D^{X(t)}$, respectively. When a proposal is made to exchange the destinations of entities with IDs = 1 and 3 and is accepted, an assignment state denoted by $\varphi^{(t+1)}$ in FIG. 2 is obtained at time step t+1. At this time, the first and third columns of $D^{X(t)}$ are swapped to correspond to the accepted assignment state, resulting in $D^{X(t+1)}$.

If the proposed assignment change is rejected, no updates to $\varphi^{(t)}$ and $D^{X(t)}$ are made.

In the case of the QAP, the state-aligned D matrix ($D^X$) is represented by the multiplication of the original distance matrix (D) with the transposed matrix $X^T$ of the binary state matrix X representing the current assignment state, as presented in equation (26). In terms of hardware, examples of a hardware configuration for swapping columns of the state-aligned D matrix will be described later.

$$\mathbf{D^X} = \mathbf{D}\mathbf{X}^T \tag{26}$$

The vector $\Delta D^X$ is calculated from equation (27) without the need for reordering the elements of the above-described vector $\Delta D$, and is substituted in equation (22) to calculate $\Delta C_{ex}$.

$$\Delta^{\phi(a)}_{\phi(b)}\mathbf{D^X} = \mathbf{D^X}_{\phi(a),*} - \mathbf{D^X}_{\phi(b),*} \tag{27}$$

In the case of QSAP, the state-aligned D matrix ($D^S$) is represented by the multiplication of the original distance matrix (D) with the transposed matrix $S^T$ of the binary state matrix S representing the current assignment state, as presented in equation (28). The matrix $D^S$ is an m-by-n matrix.

$$\mathbf{D^S} = \mathbf{D}\mathbf{S}^T, \quad \mathbf{D^S} \in \mathbb{R}^{m \times n} \tag{28}$$

Vectors $\Delta D^S$ for a destination exchange and for a relocation are calculated from equations (29) and (30), respectively, without the need for reordering the elements of the vector $\Delta D$ as described above, and are substituted in equations (24) and (25) to calculate $\Delta C^S_{ex}$ and $\Delta C^s_{rel}$, respectively.

$$\Delta^{\psi(a)}_{\psi(b)}\mathbf{D^S} = \mathbf{D^S}_{\psi(a),*} - \mathbf{D^S}_{\psi(b),*} \tag{29}$$

$$\Delta^{l}_{\psi(a)} \mathbf{D^S} = \mathbf{D^S}_{\psi(a),*} - \mathbf{D^S}_{l,*} \qquad (30)$$

In the above-described VΔC method, the reordering of the elements of the vector ΔD involves operations proportional to the number of entities, n, each time ΔC is calculated. By contrast, in the above-described technique (SAM method), the reordering of the matrices $D^X$ and $D^S$ to match an assignment state needs to be performed only when a proposed assignment change is accepted. This results in a reduction in the number of operations needed per iteration on average and an improvement in the computational efficiency, which in turn reduces the computational time and accelerates solving assignment problems.

(Boltzmann Machine Caching (comparative example))

There is another method of vectorizing the ΔC calculations. This technique calculates and stores partial ΔC values (corresponding to the local field ($h_i$) included in equation (3)) corresponding to the flipping of bits in a binary state matrix. In the following, this method is called a Boltzmann machine caching method (referred to as a BM$ method).

Each bit in a binary state matrix (X or S) has a cached local field. When a proposal for an assignment change is accepted, an n-by-n matrix (hereinafter, cache matrix) based on the local fields is updated in time proportional to $n^2$. Note that ΔC is calculated in time that does not depend on n.

In the case of QAP, the cache matrix (H) is generated at the start of the search process using equation (31) in time proportional to $n^3$.

$$\mathbf{H} = \mathbf{F}(\mathbf{D^X})^{T} = \left(h_{r,c}\right) \in \mathbb{R}^{n \times n} \qquad (31)$$

The cached local fields are used to generate a dot product ΔF·ΔD using equation (32). Then, the generated ΔF·ΔD is substituted in equation (22) to calculate $\Delta C_{ex}$.

$$\Delta^{b}_{a}\mathbf{F} \cdot \Delta^{\phi(a)}_{\phi(b)}\mathbf{D^X} = h_{a,\phi(b)} + h_{b,\phi(a)} - h_{a,\phi(a)} - h_{b,\phi(b)} \qquad (32)$$

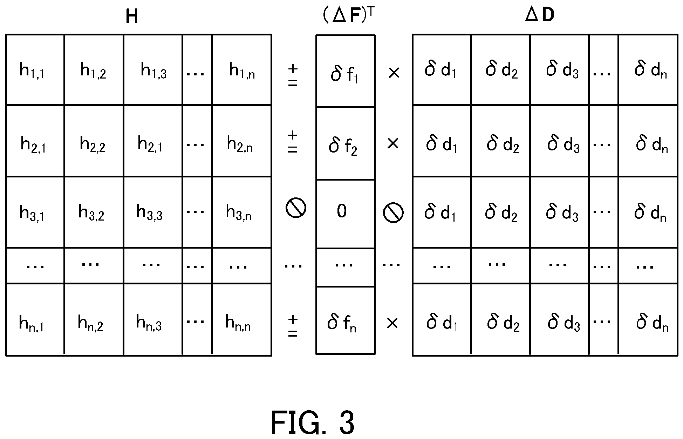

When the proposal for the assignment change is accepted, the cache matrix is updated by equation (33) using a Kronecker product, as illustrated in FIG. 3.

$$\mathbf{H} \overset{\pm}{=} \left(\Delta^{b}_{a}\mathbf{F}\right)^{T} \otimes \Delta^{\phi(a)}_{\phi(b)}\mathbf{D} \qquad (33)$$

FIG. 3 illustrates an example of calculation of updating a cache matrix.

The update is performed on a single row of the cache matrix at a time. At this time, rows with zero elements in the vector ΔF are skipped.

In the case of QSAP, a cache matrix ($H^S$) is generated using equation (34) at the start of the search process.

$$\mathbf{H}^{s} = \mathbf{F}(\mathbf{D^S})^{T} = \left(h^{s}_{r,c}\right) \in \mathbb{R}^{n \times m} \qquad (34)$$

The cached local fields are used to generate a dot product ΔF·ΔD using equation (35). Then, the generated ΔF·ΔD is substituted in equation (24) to calculate $\Delta C^{s}_{ex}$.

$$\Delta^{b}_{a}\mathbf{F} \cdot \Delta^{\psi(a)}_{\psi(b)}\mathbf{D^S} = h^{s}_{a,\psi(b)} + h^{s}_{b,\psi(a)} - h^{s}_{a,\psi(a)} - h^{s}_{b,\psi(b)} \qquad (35)$$

When a proposal for an assignment change is accepted, the cache matrix is updated by equation (36) using a Kronecker Product.

$$\mathbf{H}^s \overset{\pm}{=} \left(\Delta_a^b \mathbf{F}\right)^T \otimes \Delta_{\psi(b)}^{\psi(a)} \mathbf{D} \qquad (36)$$

Similarly, the cached local fields are used to generate a dot product $\Delta F \cdot \Delta D$ for a relocation using equation (37). Then, the generated $\Delta F \cdot \Delta D$ is substituted in equation (25) to calculate $\Delta C^S_{rel}$.

$$\mathbf{F}_{a,*} \cdot \Delta_{\psi(a)}^l \mathbf{D^S} = h_{a,l} - h_{a,\psi(a)} \qquad (37)$$

When a proposal for an assignment change for the relocation is accepted, the cache matrix is updated by equation (38).

$$\mathbf{H}^s \overset{\pm}{=} \left(\mathbf{F}_{a,*}\right)^T \otimes \Delta_{\psi(a)}^l \mathbf{D} \qquad (38)$$

The above-described BM$ method needs to hold the cache matrix. A larger-scale problem needs more memory capacity to hold a cache matrix, which makes it difficult to use a memory that has a small capacity but is designed for fast reading. By contrast, the SAM method does not need to hold such a cache matrix.

(Solver System Design)

To compare and evaluate the performance of the above-described three methods (V$\Delta$C method, SAM method, and BM$ method), a solver system is designed as described below. In the following, the processing unit 12 of the data processing apparatus 10 includes a multi-core CPU with SIMD capability, and implements a parallel tempering algorithm on the multi-core CPU.
Each dedicated core has a dedicated cache for holding search instance data (the above-described $D^X$, $D^S$, H, $H^S$).

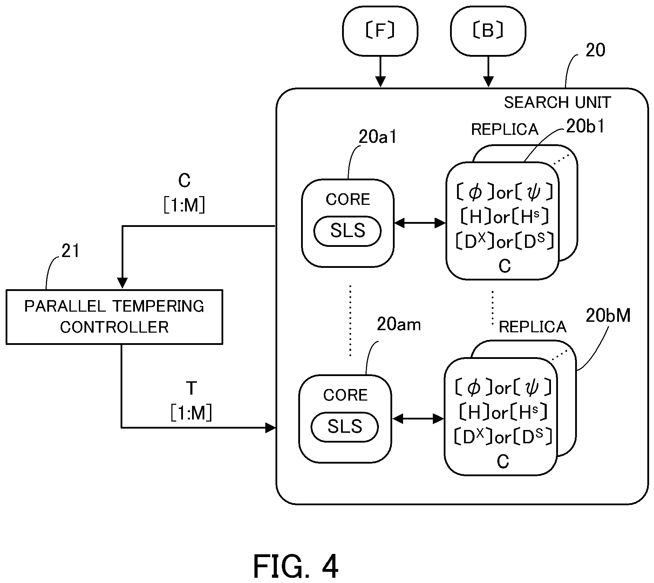

FIG. 4 illustrates an example of the solver system that performs parallel tempering.
The solver system includes a search unit 20 and a parallel tempering controller 21. The search unit 20 includes a plurality of cores 20a1 to 20am, each of which performs the above-described stochastic local search (SLS) on a plurality of replicas (corresponding to an instance) in parallel. The number of replicas is M. The core 20a1 performs local search on a plurality of replicas including a replica 20b1, and the core 20am performs local search on a plurality of replicas including the replica 20bM.
In the case of QAP, the above-described integer assignment vector $\varphi$, cache matrix (H) (in the case of the BM$ method), state-aligned D matrix ($D^x$) (in the case of the SAM method), and the value (C) of the evaluation function are held for each replica.
In the case of QSAP, the above-described integer assignment vector $\varphi$, cache matrix ($H^S$) (in the case of the BM$ method), state-aligned D matrix ($D^S$) (in the case of the SAM method), and the value (C) of the evaluation function are held for each replica.
The flow matrix (F) defined by equation (6) and the matrix B defined by equation (10) used for the QSAP are used in common for all the replicas 20b1 to 20bM.
The temperature parameter (T) with all different values is set for the M replicas 20b1 to 20bM. The replicas 20b1 to 20bM are respectively set with temperatures that gradually increase from $T_{min}$ to $T_{max}$. A collection of the temperature parameter values that gradually increase may be called a temperature ladder.
The parallel tempering controller 21 swaps, between replicas with adjacent temperature parameter values ($T_k$ and $T_{k+i}$), the temperature parameter values $T_k$ and $T_{k+i}$ with a swap acceptance probability SAP given by equation (39) on the basis of the values ($C_k$ and $C_{k+1}$) of the evaluation function and the $T_k$ and $T_{k+1}$ values.

$$SAP = min\{1, exp((1/T_k - 1/T_{k+1})(C_k - C_{k+1}))\} \qquad (39)$$

The above-described search unit 20 and parallel tempering controller 21 are implemented by the processing unit 12 and storage unit 11 illustrated in FIG. 2.
For example, the flow matrix, state-aligned D matrix, and cache matrix are stored in a single precision floating point format in the storage unit 11, in order to leverage fused multiply-add instructions when calculating the dot products

for the V∆C and SAM methods and updating the cache matrix.

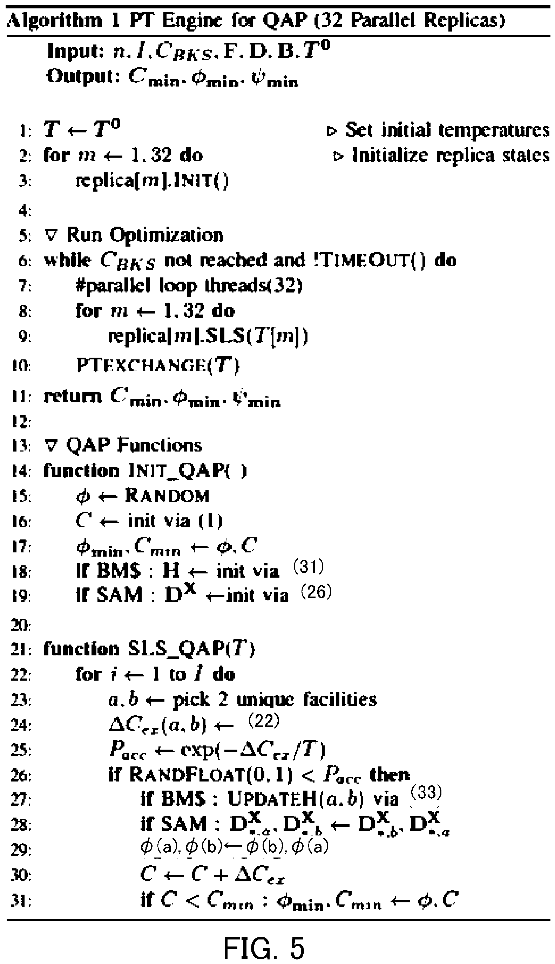

FIG. 5 illustrates an example of an algorithm for solving QAP with local search using parallel tempering. The algorithm presented as an example in FIG. 5 runs 32 replicas in parallel for local search. In this connection, "(1)," "(31)," and the like in the 16-th, 18-th, and other lines in FIG. 5 refer to equations (1), (31), and others.

The algorithm starts by initializing the values of the temperature parameter and the states of the replicas. The solver system then enters an optimization loop where all the replicas perform the local search in parallel for I iterations.

After the I iterations of the local search, a replica exchange process is performed, and then the optimization loop resumes until a preset best-known solution (BKS) cost ($C_{BKS}$) is found or a time-out limit is reached.

In the local search for the QAP, a loop is run for a preset number of iterations (I), where two entities (facilities in the example of FIG. 5) are selected, and the $\Delta C_{ex}$ value for the exchange between the destinations of the two entities is calculated using a selected method (V∆C method, BM$ method, or SAM method).

Then, a $P_{acc}$ value is calculated from equation (18) using the calculated $\Delta C_{ex}$ and the replica's current temperature parameter value. A random number in the range of 0 to 1 is generated and is compared with the $P_{acc}$ value to perform a Bernoulli trial to determine whether to accept the proposal for the exchange between the destinations of the selected two entities. If the proposal is accepted, the state (assignment state) is updated.

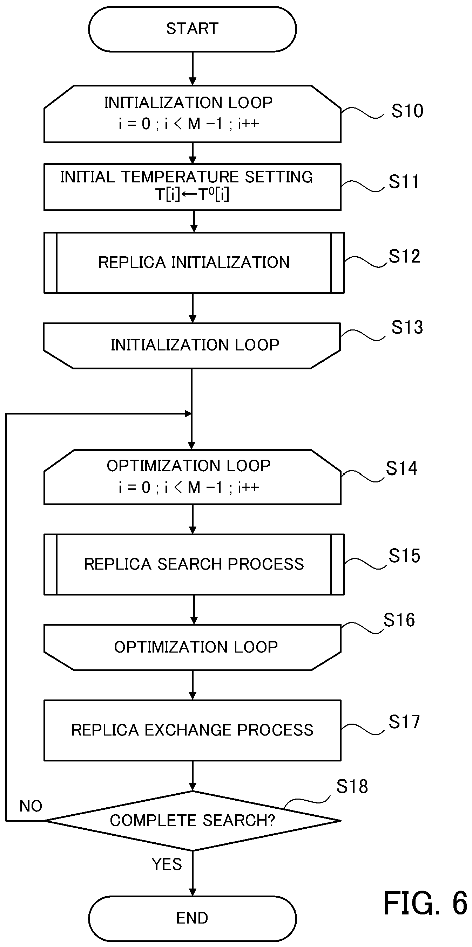

FIG. 6 is a flowchart illustrating the entire process of local search using parallel tempering. More specifically, FIG. 6 illustrates the entire process of the local search using the parallel tempering, implemented by the algorithm of FIG. 5.

First, an initialization loop (steps S10 to S13) is run while incrementing i one by one from i = 0 to i < M - 1, where M denotes the number of replicas (32 replicas in the example of FIG. 5).

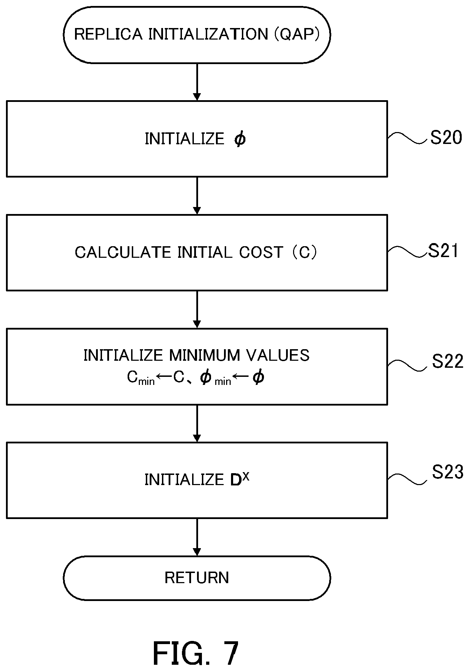

The initialization loop sets the initial temperature (temperature ladder) for each replica (T[i] ← T⁰[i]) (step S11). Then, a replica initialization process (see FIG. 7) is performed (step S12).

Then, an optimization loop (steps S14 to S16) is run while incrementing i one by one from i = 0 to i < M - 1.

The optimization loop performs a replica search process (step S15). In the replica search process, each replica performs local search at the set temperature parameter value for I iterations.

After that, a replica exchange process (step S17) is performed, and it is then determined whether to complete the search (step S18). For example, as described earlier, when a preset BKS cost ($C_{BKS}$) is found or a time-out limit is reached, it is determined to complete the search, and the search is completed. If it is determined not to complete the search, the optimization loop resumes from step S14.

In this connection, the data processing apparatus 10 may be designed to output the search result (for example, minimum values $C_{min}$ and $\varphi_{min}$, to be described later) when the search is completed. The search result may be displayed on a display device connected to the data processing apparatus 10 or may be sent to an external device, for example.

Although the replicas are run in order in the example of FIG. 6, a 32-core processor may be used to execute steps S11, S12, and S15 on the 32 replicas in parallel.

The following describes the replica initialization process of step S12 and the replica search process of step S15 with the SAM method as an example, with reference to flowcharts.

FIG. 7 is a flowchart illustrating an example of the replica initialization process for the QAP.

First, an integer assignment vector φ is initialized (step S20). For example, the destinations (locations of facilities) of the entities are randomly determined at step S20. Then, the initial cost (C) is calculated from equation (1) (step S21).

Then, the minimum values ($C_{min}$ and $\varphi_{min}$) are initialized to the initialized C and φ (step S22). In addition, a state-aligned D matrix ($D^X$) is initialized to correspond to the initial values of φ (step S23). Then, the process proceeds back to the flowchart of FIG. 6.

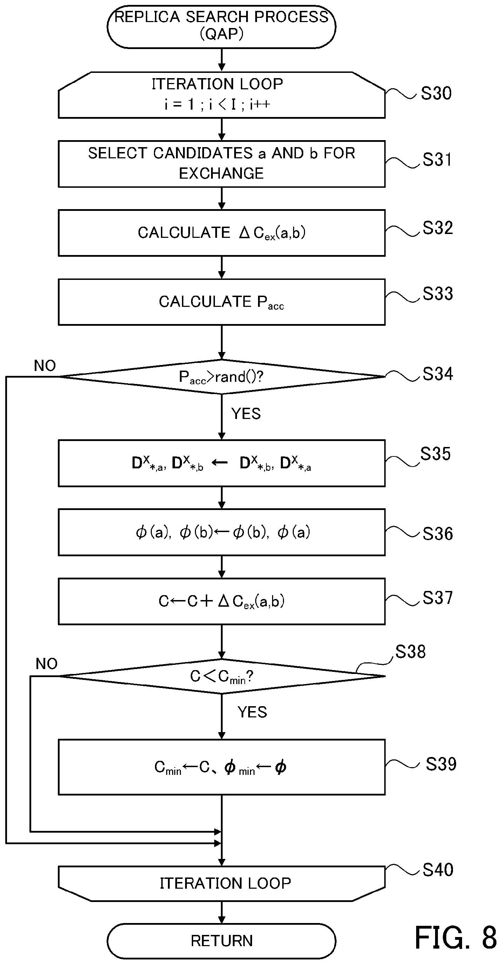

FIG. 8 is a flowchart illustrating an example of the replica search process for the QAP.

In the replica search process, an iteration loop (steps S30 to S40) is run while incrementing i one by one from i = 1 to i < I.

First, two entities (identified by IDs = a and b) are selected as candidates for a destination exchange (step S31).

Then, the $\Delta C_{ex}(a,b)$ value for the destination exchange between the two entities is calculated from equation (22) (step S32).

Then, $P_{acc}$ is calculated from equation (18) using the calculated $\Delta C_{ex}$ and the replica's current temperature parameter value (step S33). Then, it is determined whether $P_{acc}$ is greater than a random number rand() in the range of 0 to 1 (step S34).

If $P_{acc}$ > rand() is obtained, the a-th and b-th columns of $D^X$ are swapped ($D^X_{*,a}$, $D^X_{*,b}$ ← $D^X_{*,b}$, $D^X_{*,a}$) (step S35). In addition, the assignment state is updated according to the destination exchange (φ(a), φ(b) ← φ(b), φ(a)) (step S36), and the value (C) of the evaluation function is updated (C ← C + $\Delta C_{ex}(a,b)$) (step S37).

After that, it is determined whether C < $C_{min}$ is satisfied (step S38). If C < $C_{min}$ is obtained, the minimum values are updated ($C_{min}$ ← C, $\varphi_{min}$ ← φ) (step S39).

After step S39 is executed, if $P_{acc}$ > rand() is not obtained at step S34, or if C < $C_{min}$ is not obtained at step S38, the process is repeated from step S31 until i reaches I. When i = I, the process proceeds back to the flowchart of FIG. 6.

The order of the steps in FIGS. 6 to 8 is just an example, and the steps may be executed in a different order as appropriate.

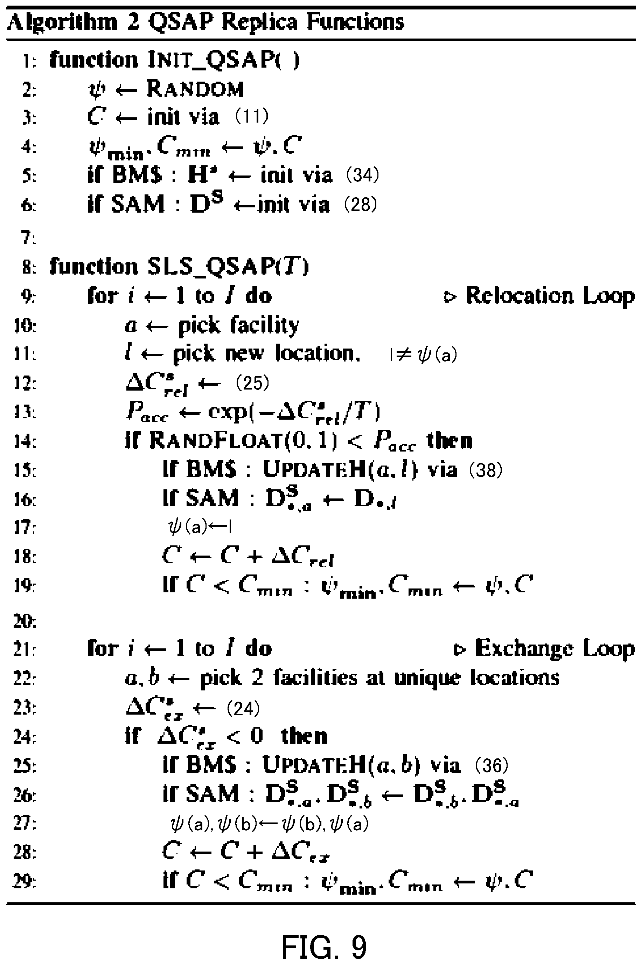

FIG. 9 illustrates an example of an algorithm for solving QSAP with local search using parallel tempering.

The local search function illustrated in FIG. 9 for solving QSAP includes a relocation loop of determining whether to accept a relocation proposal and performing updating before an exchange loop of determining whether to exchange destinations between two entities and performing updating.

The following describes the replica initialization process of step S12 of FIG. 6 and the replica search process of step S15 for solving the QSAP with the SAM method as an example, with reference to flowcharts.

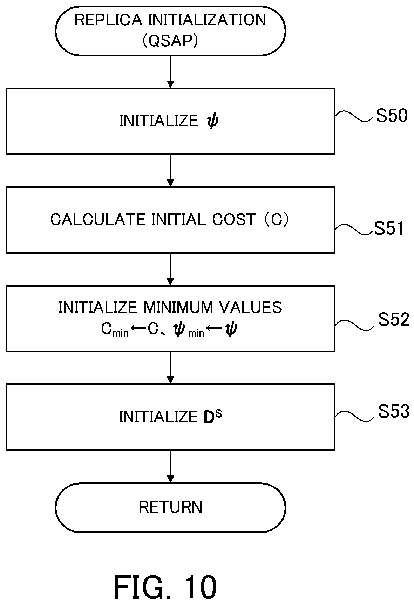

FIG. 10 is a flowchart illustrating an example of the replica initialization process for the QSAP.

First, an integer assignment vector $\Psi$ is initialized (step S50). For example, the destinations (locations of facilities) of the entities are randomly determined at step S50. Then, the initial cost (C) is calculated from equation (11) (step S51).

Then, the minimum values ($C_{min}$ and $\Psi_{min}$) are initialized to the initialized C and $\Psi$ (step S52). In addition, a state-aligned D matrix ($D^S$) is initialized to correspond to the initial values of $\Psi$ using equation (28) (step S53). Then, the process proceeds back to the flowchart of FIG. 6.

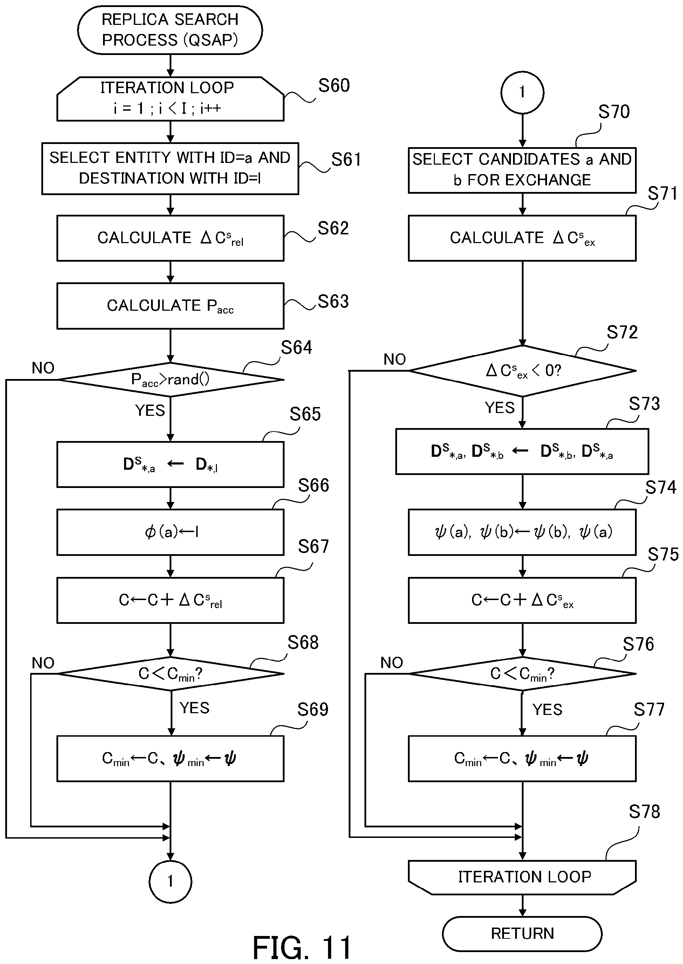

FIG. 11 is a flowchart illustrating an example of the replica search process for the QSAP.

In the replica search process for the QSAP, an iteration loop (steps S60 to S78) is run while incrementing i one by one from i = 1 to i < I.

First, an entity with ID = a and a destination with ID = 1 are selected (step S61).

Then, a $\Delta C^S_{rel}$ value for the assignment of the entity with ID = a to the destination with ID = 1 is calculated from equation (25) (step S62).

Then, $P_{acc}$ is calculated from equation (18) using the calculated $\Delta C^S_{rel}$ and the replica's current temperature parameter value (step S63). Then, it is determined whether $P_{acc}$ is greater than a random number rand() in the range of 0 to 1 (step S64).

If $P_{acc} >$ rand() is obtained, the values of the a-th column of $D^S$ are updated to the values of the 1-th column of the distance matrix D (step S65). In addition, the assignment state is updated accordingly $\varphi(a) \leftarrow 1$) (step S66), and the value (C) of the evaluation function is updated (C $\leftarrow$ C + $\Delta C^S_{rel}$) (step S67).

After that, it is determined whether C < $C_{min}$ is satisfied (step S68). If C < $C_{min}$ is obtained, the minimum values are updated ($C_{min} \leftarrow$ C, $\Psi_{min} \leftarrow \Psi$) (step S69) .

After step S69 is executed, if $P_{acc} >$ rand() is not obtained at step S64, or if C < $C_{min}$ is not obtained at step S68, step S70 is executed.

At step S70, two entities (identified by IDs = a and b) are selected as candidates for a destination exchange.

Then, the $\Delta C^S_{ex}$ value for the destination exchange between the two entities is calculated from equation (24) (step S71).

Then, it is determined whether $\Delta C^S_{ex} < 0$ is satisfied (step S72). Here, a predetermined value (a fixed value) may be used instead of 0.

If $\Delta C^S_{ex} < 0$ is obtained, the a-th and b-th columns of $D^S$ are swapped ($D^S_{*,a}$, $D^S_{*,b} \leftarrow D^S_{*,b}$, $D^S_{*,a}$) (step S73) . In addition, the assignment state is updated according to the destination exchange ($\Psi(a)$, $\Psi(b) \leftarrow \Psi(b)$ , $\Psi(a)$) (step S74), and the value (C) of the evaluation function is updated (C $\leftarrow$ C + $\Delta C^S_{ex}$) (step S75) .

After that, it is determined whether C < $C_{min}$ is satisfied (step S76). If C < $C_{min}$ is obtained, the minimum values are updated ($C_{min} \leftarrow$ C, $\Psi_{min} \leftarrow \Psi$) (step S77) .

After step S77 is executed, if $\Delta C^S_{ex} < 0$ is not obtained at step S72, or if C < $C_{min}$ is not obtained at step S76, the process is repeated from step S61 until i reaches I. When i = I, the process proceeds back to the flowchart of FIG. 6.

The order of the steps in FIGS. 10 and 11 is just an example, and the steps may be executed in a different order as appropriate.

(Evaluation Result of Calculation Speeds)

First presented is a result of evaluating the calculation speeds of three methods: V$\Delta$C method, SAM method, and BM$ method using scalar operations. Ten QAP instances were solved with the algorithm illustrated in FIG. 5. Here, two solver systems as illustrated in FIG. 4 were used to run 64 replicas using parallel tempering.

Each instance was executed 100 times sequentially and independently with random seeds, and the time (time-to-solution, TtS) taken to reach the BKS was recorded.

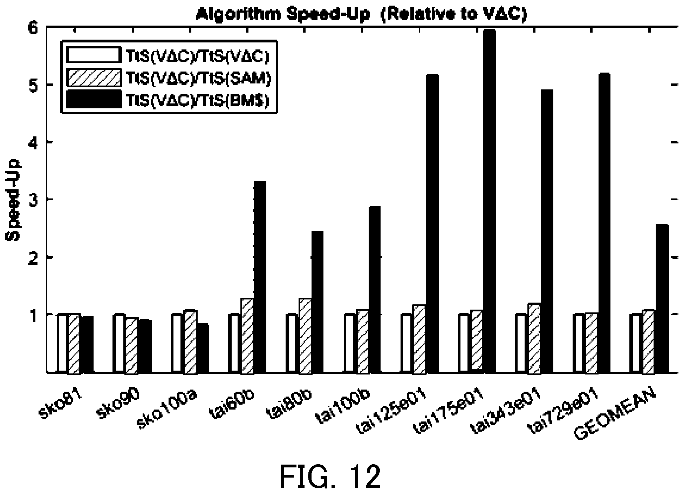

FIG. 12 illustrates an evaluation result of calculation speed-ups of the SAM and BM$ methods relative to the V$\Delta$C method. The horizontal axis represents 10 QAP instances and the geometric mean (denoted by "GEOMEAN" in FIG. 12), whereas the vertical axis represents the speed-ups of the SAM and BM$ methods relative to the V$\Delta$C method. Each speed-up is expressed as the TtS ratio of the SAM or BM$ method to the V$\Delta$C method.

The SAM method exhibits calculation speed-ups relative to the V$\Delta$C method, despite the fact that the SAM method has an additional computational cost for updating $D^X$.

In this connection, the BM$ method exhibits a geometric mean speed-up by 2.57 times relative to the V△C method.

(Calculation Speed-Up of SIMD)

The following presents an evaluation result of calculation speed-ups achieved by vector operations relative to scalar operations. Advanced vector extensions (AVX)2 SIMD intrinsics were used for the vector operations.
The same 10 QAP instances as used above were executed in the vector operations, using the same procedure as described above.

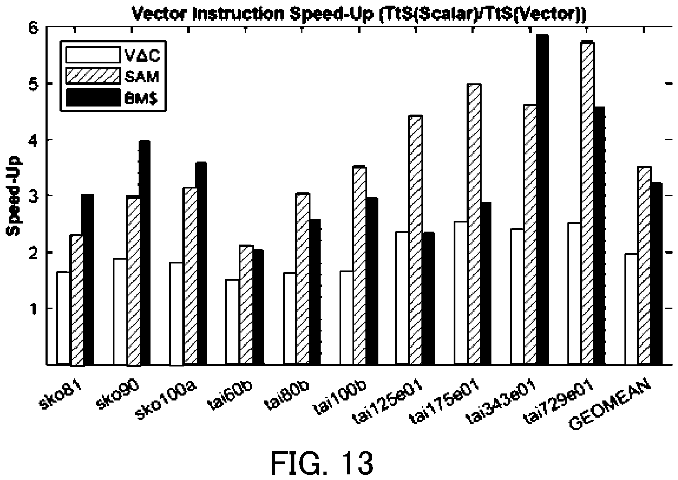

FIG. 13 illustrates an evaluation result of speed-ups achieved by the vector operations relative to the scalar operations. The horizontal axis represents the 10 QAP instances and the geometric mean (denoted by "GEOMEAN" in FIG. 13), whereas the vertical axis represents the speed-ups achieved by the vector operations relative to the scalar operations. Each speed-up of the V△C, SAM, and BM$ methods is expressed as the TtS ratio of the vector operations to the scalar operations.
On average, the vector operations exhibit nearly two times faster than the scalar operations with respect to the V△C method, and three times or more faster with respect to the BM$ and SAM methods. Since the V△C method consumes a significant portion of its run-time for reordering the elements of the vector △D, as described earlier, it has the least benefit from the SIMD intrinsics.

(Dynamic Load Balancing)

In parallel tempering, a replica with the lowest temperature and a replica with the highest temperature have different PAR values. PAR increases as the T value increases (as the temperature increases). Therefore, the update processes in the SAM and BM$ methods may cause wide run-time gaps between threads of running replicas.
To mitigate this, the data processing apparatus 10 tracks the time per iteration within the SLS function at each temperature and uses the time to scale the number of iterations executed at each temperature.

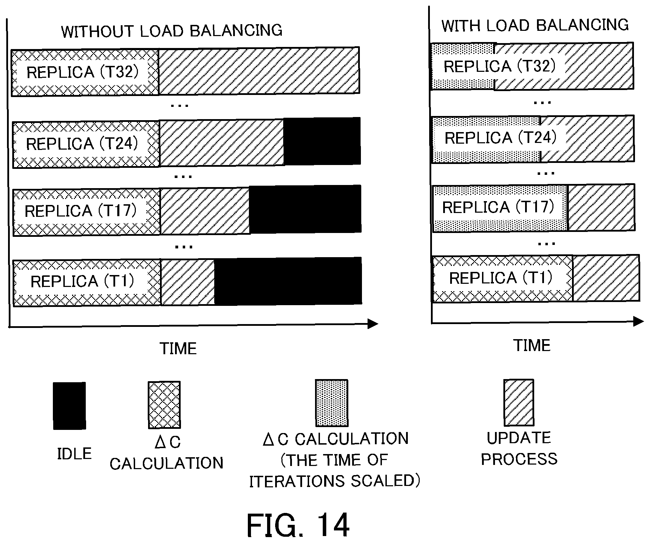

FIG. 14 illustrates an example of load balancing. FIG. 14 illustrates the times taken to calculate △C before exchange of the temperature parameter and the times taken to perform the update process, with respect to 32 replicas set with a temperature ladder of T1 to T32 (T1 < T2 < ... < T32).
Without the load balancing, a replica with a higher temperature parameter value needs a longer time for the update process, whereas a replica with a lower temperature parameter value needs a shorter time for the update process. This means that a replica with a lower temperature parameter value has a longer idle time.
By contrast, with the load balancing, for example, using the run-time (thread run-time) of a replica with T1 as a reference, the number of iterations of the △C calculation is scaled with respect to the other replicas.
As seen in FIG. 14, the load balancing makes the thread run-times roughly equal among the replicas and thus reduces the idle thread time.
To quantify the efficiency of the load balancing, the following describes an evaluation result of computational speed-ups achieved by the load balancing, using the above-described 10 instances.

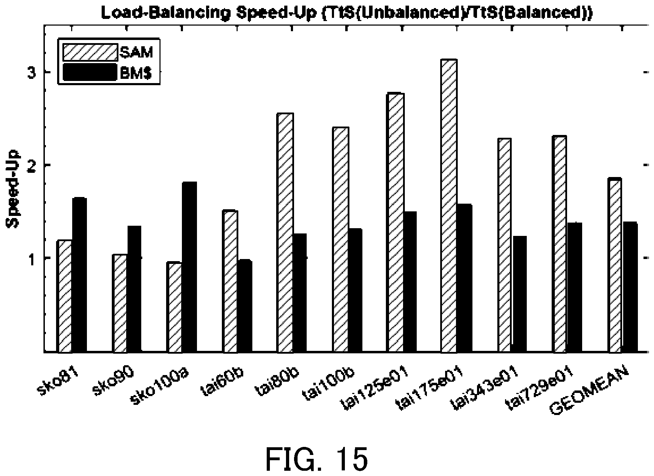

FIG. 15 illustrates an evaluation result of computational speed-ups achieved by the load balancing. The horizontal axis represents the 10 QAP instances and the geometric mean "GEOMEAN," whereas the vertical axis represents computational speed-ups achieved by the load balancing relative to no load balancing. Each speed-up is expressed as the TtS ratio of the SAM or BM$ method with load balancing to the SAM or BM$ method without load balancing. In this connection, the same temperature parameter values (for example, T1 to T32 of FIG. 14) are set for both cases with and without the load balancing.
It is confirmed that the load balancing achieves computational speed-ups by 1.86 times and 1.38 times on average for the SAM and BM$ methods, respectively. The difference in the efficiency of the load balancing among instance families may be attributed to different PAR gaps between the temperature parameter extremes due to the characteristics of the instance families.
The evaluation results of calculation speed-ups provided by the above-described features are summarized in Table 1.

TABLE I: TtS Speed-Ups due to Features

| Feature | Incremental Speed-Up | | | Comutative Speed-Up* | | |
|---|---|---|---|---|---|---|
| | V△C | SAM | BMS | V△C | SAM | BMS |
| Scalar Algorithm | 1.00× | 1.07× | 2 57× | 1.00× | 1.07× | 2.57× |
| Vector | 1.94× | 3.51× | 3.22x | 1.94× | 3.75× | 8.28× |

(continued)

| Feaure | Incremental Speed-Up | | | Comutative Speed-Up* | | |
|---|---|---|---|---|---|---|
| | V△C | SAM | BMS | V△C | SAM | BMS |
| Load Balancing | - | 1.86× | 1.38× | - | 6.96× | 11.44× |
| *Speed-Up values are relative to a scalar V△C implementation | | | | | | |

Two kinds of speed-ups (incremental speed-up and cumulative speed-up) are presented. In this connection, the speed-ups are calculated using the geometric mean of TtS across the above-described 10 instances, with the TtS of the V△C method using scalar operations as a reference (1.00).

(Benchmark Results)

With respect to the above-described V△C, SAM, and BM$ methods, benchmark scores were measured using the data processing apparatus 10 having a predetermined hardware configuration including a 64-core CPU.
To measure the benchmark scores of QAP solvers that perform the above three methods, instances from the QAP library reference (see the above "QAPLIB - a quadratic assignment problem library") were used. In addition, instances proposed by the above "An algorithm for construction of test cases for the quadratic assignment problem" and "Recent advances for the quadratic assignment problem with special emphasis on instances that are difficult for meta-heuristic methods" were used. The present embodiment attempts to find new BKS states for QAP of large problem size (without known optimal solution) presented by the foregoing "Recent advances for the quadratic assignment problem with special emphasis on instances that are difficult for meta-heuristic methods". In addition, a set of instances introduced by the above "Quadratic assignment problem variants: A survey and an effective parallel memetic iterated tabu search" was used for measuring the benchmark scores of QSAP solvers.

(QAP Benchmarks)

# TABLE II: QAP TtS Across Solvers (values in seconds)

| Instance | Prior Work | | This Work | | |
|---|---|---|---|---|---|
| | ParEOTS | PBM | V∆C | SAM | BM$ |
| dre42 | 0.7 | 0.28 | 0.28 ± 0.02 | 0.19 ± 0.01 | 0.10 ± 0.01 |
| dre56 | 5.6 | 1.59 | 2.92 ± 0.16 | 1.85 ± 0.11 | 0.99 ± 0.07 |
| dre72 | 26 | 11.01 | 21.72 ± 1.1 | 11.65 ± 0.61 | 5.23 ± 0.31 |
| Inst50 | 17 | 5.53 | 10.9 ± 0.75 | 6.76 ± 0.45 | 3.58 ± 0.27 |
| Inst60 | 67 | 1.61 | 5.35 ± 0.38 | 3.87 ± 0.27 | 2.00 ± 0.16 |
| Inst70 | 127 | 10.67 | 20.01 ± 1.6 | 15.06 ± 1.77 | 6.24 ± 0.98 |
| Inst80 | 116 | 27.66 | 73.02 ± 6.27 | 48.73 ± 3.84 | 19.36 ± 1.75 |
| sko81 | 22.4 | 0.21 | 0.40 ± 0.02 | 0.21 ± 0.01 | 0.13 ± 0.01 |
| sko90 | 92 | 0.49 | 0.73 ± 0.05 | 0.43 ± 0.02 | 0.26 ± 0.01 |
| sko100a | 69 | 0.56 | 0.71 ± 0.04 | 0.41 ± 0.03 | 0.27 ± 0.01 |
| sko100b | 45 | 0.57 | 0.50 ± 0.02 | 0.31 ± 0.01 | 0.19 ± 0.01 |
| sko100c | 56 | 0.75 | 1.18 ± 0.08 | 0.61 ± 0.04 | 0.29 ± 0.02 |
| sko100d | 37 | 0.84 | 1.18 ± 0.06 | 0.66 ± 0.03 | 0.38 ± 0.02 |
| sko100e | 47 | 0.61 | 0.56 ± 0.02 | 0.30 ± 0.01 | 0.21 ± 0.01 |
| sko100f | 57 | 0.64 | 0.60 ± 0.02 | 0.32 ± 0.01 | 0.24 ± 0.01 |
| tai60b | 4.6 | 0.22 | 0.45 ± 0.03 | 0.18 ± 0.01 | 0.14 ± 0.01 |
| tai80b | 53 | 0.59 | 2.15 ± 0.10 | 0.50 ± 0.03 | 0.43 ± 0.01 |
| tai100b | 71 | 0.48 | 2.37 ± 0.16 | 0.42 ± 0.03 | 0.36 ± 0.02 |
| wil100 | 97 | 0.77 | 1.11 ± 0.07 | 0.59 ± 0.03 | 0.46 ± 0.02 |
| Speedup* | 0.06× | 1.74× | 1.00× | 1.92× | 3.22× |

*Geometric mean of TtS speed-up across instances relative to V∆C

Table 2 presents TtS values across QAP instances, obtained by solvers that perform the three methods (V∆C method, and SAM and BM$ methods with load balancing) with vector operations. In addition, Table 2 presents speed-ups (based on the geometric mean of TtS), with a TtS value obtained by the V∆C method using the vector operations as a reference (1.00). Table 2 also presents TtS values and speed-ups obtained by two published solvers, ParEOTS (see the above "Hybridization as cooperative parallelism for the quadratic assignment problem") and permutational Boltzmann machine (PBM) (see the above "The quadratic assignment problem"). These two published solvers are able to solve some difficult instances with a 100% success rate within a five-minute time-out window.

Each TtS value presented in Table 2 is the average value (with 99% confidence intervals) of the measured TtS values obtained by performing local search 100 times independently and sequentially with one of the V∆C, SAM, and BM$ methods. A five-minute time-out limit is set for each execution. The TtS values for ParEOTS and PBM are taken from their respective disclosures.

As seen in Table 2, the BM$ method exhibits the best performance across all instances among the five solvers, with upwards of 2 times and 300 times faster than the PBM and ParEOTS, respectively. The SAM and BM$ methods exhibit mean speed-ups of 1.92 times and 3.22 times faster than the V∆C method, respectively. In this connection, the difference in the results of Table 2 from Table 1 is due to the instances used.

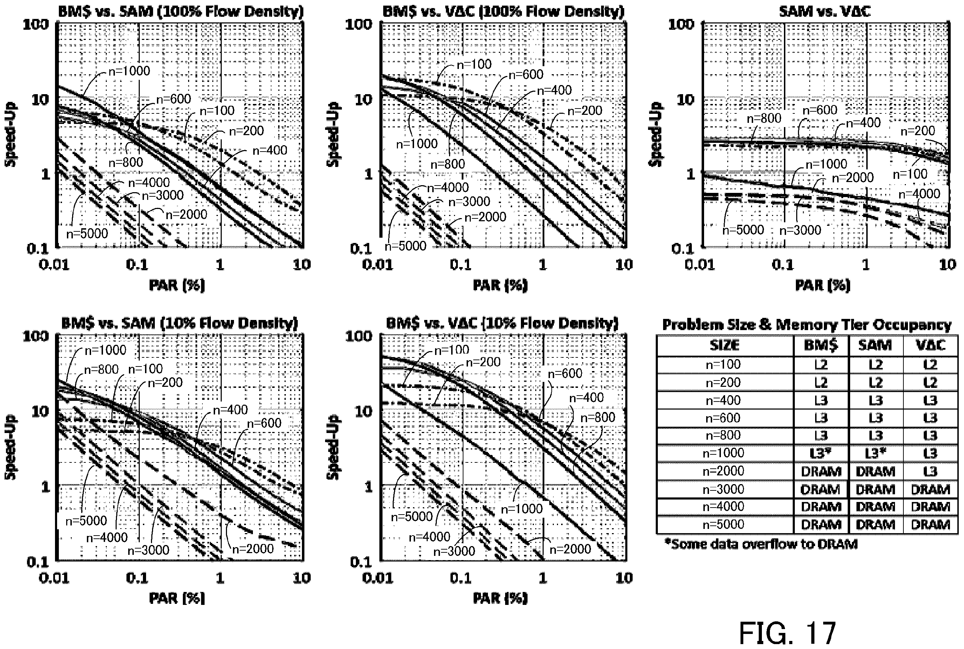

However, when it comes to which method is better, the SAM method or the BM$ method, that depends on problem size and PAR. In some cases, the SAM method has an advantage over the BM$ method. For example, as will be described later (see FIG. 17), there is a tendency that, with a higher PAR, the SAM method has more advantage over the BM$ method. In addition, the present disclosure presents the evaluation results obtained by implementing the algorithms on CPU with relatively large memory. In the case where the algorithms are implemented on dedicated circuits, the SAM method, which does not need to store local fields, may have an advantage over the BM$ method.

(QSAP Benchmarks)

Compared with the QAP, there are few prior works on QSAP solvers. A main reference discloses the parallel memetic iterative tabu search (PMITS) algorithm implemented on a 20-core CPU (see foregoing "Quadratic assignment problem variants: A survey and an effective parallel memetic iterated tabu search"). PMITS uses 50% of the population and reaches the same best-found solution as its stopping criterion with a one-hour time-out limit. This is a reasonable way of predicting convergence with a memetic algorithm using cooperative replicas. However, in parallel tempering, where replicas are constantly in flux along a temperature ladder, such a criterion is implausible.

As such, the present embodiment measured TtS values in the same manner as for the QAP, and also measured TtS values of PMITS as a reference. Table 3 presents a result of the measurements, but does not present the relative performance difference between the parallel tempering solvers and PMITS.

## TABLE III: QSAP TtS Across Solvers (values in seconds)

| Instance | | Prior | This Work | | |
|---|---|---|---|---|---|
| ID | n × m | [10] | VΔC | SAM | BM$ |
| 50-C1 | 35×15 | ~0 | 0.64 ± 0.06 | 0.37 ± 0.03 | 0.29 ± 0.03 |
| 50-C10 | 35×15 | ~0 | 0.46 ± 0.04 | 0.37 ± 0.03 | 0.34 ± 0.03 |
| 50-C25 | 35×15 | ~0 | 0.6 ± 0.06 | 0.37 ± 0.04 | 0.34 ± 0.03 |
| 50-C50 | 35×15 | ~0 | 0.54 ± 0.05 | 0.43 ± 0.04 | 0.36 ± 0.04 |
| 75-C1 | 53×22 | ~0 | ~ 0 | ~ 0 | ~ 0 |
| 75-C10 | 53×22 | ~0 | ~ 0 | ~ 0 | ~ 0 |
| 75-C25 | 53×22 | ~0 | ~ 0 | ~ 0 | ~ 0 |
| 75-C50 | 53×22 | ~0 | ~ 0 | ~ 0 | ~ 0 |
| 100-C1 | 70×30 | 6 | ~ 0 | ~ 0 | ~ 0 |
| 100-C10 | 70×30 | 6 | ~ 0 | ~ 0 | ~ 0 |
| 100-C25 | 70×30 | ~0 | ~ 0 | ~ 0 | ~ 0 |
| 100-C50 | 70×30 | ~0 | ~ 0 | ~ 0 | ~ 0 |
| 125-C1 | 88×37 | 36 | 0.15 ± 0.01 | 0.08 ± 0.01 | 0.06 ± 0.01 |
| 125-C10 | 88×37 | 42 | 0.18 ± 0.02 | 0.08 ± 0.01 | 0.07 ± 0.01 |
| 125-C25 | 88×37 | 42 | 0.24 ± 0.02 | 0.14 ± 0.01 | 0.09 ± 0.01 |
| 125-C50 | 88×37 | 48 | 0.73 ± 0.08 | 0.35 ± 0.03 | 0.22 ± 0.02 |
| 150-C1 | 105×45 | 450 | ~ 0 | ~ 0 | ~ 0 |
| 150-C10 | 105×45 | 432 | ~ 0 | ~ 0 | ~ 0 |
| 150-C25 | 105×45 | 3480 | 9.91 ± 0.95 | 6.7 ± 0.7 | 5.49 ± 0.53 |
| 150-C50 | 105×45 | 3450 | 39.52 ± 4.27 | 24.54 ± 2.17 | 21.87 ± 2.22 |
| Speedup* | - | - | 1.00× | 1.49× | 1.71× |

*Geometric mean of TtS speed-up across instances relative to VΔC

It is confirmed from Table 3 that, compared to the QAP, the performance of the SAM and BM$ methods relative to the VΔC method across all QSAP instances drops by nearly two times. This drop is considered to be due to higher PAR values.

(QAP Scaling on Extended Taillard Instances)

Some QAP instances introduced by the above "Recent advances for the quadratic assignment problem with special emphasis on instances that are difficult for meta-heuristic methods" have unknown optimal solutions and are sized up to n = 729. Due to their size and difficulty, they are rarely used for benchmarking. However, the data processing apparatus 10 solved these instances with the VΔC, SAM, and BM$ methods with a preset time limit in an attempt to find better solutions.

Previous attempts at improving the BKS values of these instances resulted in little to no improvement, despite running for minutes to hours (see the above "Randomized decomposition solver with the quadratic assignment problem as a case study", for example).

In the experiments, each instance was executed 20 times. In addition, the instances of sizes n = 125 and n = 175 were terminated after 10 seconds, and the instances of n = 343 and n = 729 were terminated after 30 seconds. Tables 4 and 5 present the average cost together with the best found cost (the value of the evaluation function of equation (1)), obtained for each instance with the VΔC, SAM, and BM$ methods.

## TABLE IV

| Instance | | VΔC | | SAM | | BM$ | |
|---|---|---|---|---|---|---|---|
| ID | BKS | Best | Avg. | Best | Avg. | Best | Avg. |
| 125e01 | 35426 | 35646 | 36077 | 35426 | 35440.3 | 35426 | 35431.2 |
| 125e02 | 36776 | 36790 | 37813.7 | 36202 | 36484.3 | 36178 | 36354.2 |
| 125e03 | 30498 | 30498 | 30789.1 | 30498 | 30529 | 30498 | 30513.2 |
| 125e04 | 33470 | 33112 | 33631.4 | 33084 | 33101.1 | 33084 | 33091.2 |
| 125e05 | 38432 | 37254 | 37560.7 | 37210 | 37240.4 | 37210 | 37212.2 |
| 125e06 | 35546 | 34624 | 35015.5 | 34624 | 34649.7 | 34624 | 34624.8 |
| 125e07 | 32712 | 31020 | 31257.1 | 31020 | 31025.2 | 31020 | 31022.6 |
| 125e08 | 36354 | 34630 | 34989.8 | 34424 | 34520.2 | 34424 | 34447 |
| 125e09 | 35008 | 34282 | 34708.2 | 34244 | 34276.6 | 34244 | 34270.6 |
| 125e10 | 34898 | 35560 | 36274 | 34986 | 35235.6 | 34898 | 35007.9 |
| 125e11 | 33082 | 32316 | 32630.9 | 32132 | 32146.4 | 32132 | 32132.6 |
| 125e12 | 32402 | 32546 | 33158.4 | 32326 | 32373.2 | 32326 | 32349.8 |
| 125e13 | 35432 | 34466 | 35560 | 34082 | 34230 | 34082 | 34124.6 |
| 125e14 | 30548 | 31624 | 32510.1 | 30840 | 31558.7 | 30668 | 31064.7 |
| 125e15 | 34328 | 32738 | 33160.1 | 32614 | 32658.3 | 32614 | 32625.1 |
| 125e16 | 33998 | 31058 | 31267 | 31058 | 31060.7 | 31058 | 31064.3 |
| 125e17 | 35606 | 35218 | 35439.9 | 35074 | 35151.7 | 35074 | 35095.5 |
| 125e18 | 39600 | 37126 | 37604 | 36712 | 36739.3 | 36712 | 36738.1 |
| 125e19 | 33034 | 33092 | 33899.3 | 32966 | 33072.6 | 32966 | 33035.6 |
| 125e20 | 31996 | 31232 | 31797.2 | 30896 | 30992.9 | 30896 | 30920.1 |
| 175e01 | 59732 | 58504 | 60271.6 | 57768 | 58142.4 | 57564 | 57921.9 |
| 175e02 | 51464 | 50252 | 52252.7 | 49492 | 49830.9 | 49328 | 49707.2 |
| 175e03 | 54234 | 54180 | 56839.3 | 54210 | 54817.9 | 53900 | 54683.4 |
| 175e04 | 64506 | 61148 | 63028 | 60108 | 60815.7 | 60246 | 60486.2 |
| 175e05 | 51526 | 51180 | 53272.9 | 50340 | 50669.6 | 50226 | 50440.8 |
| 175e06 | 55768 | 55628 | 57724.7 | 54826 | 55148 | 54752 | 55139.6 |
| 175e07 | 53180 | 53398 | 55226.2 | 52142 | 52687.4 | 52220 | 52588 |
| 175e08 | 57334 | 55854 | 58242.7 | 54454 | 55024.1 | 54440 | 54823.1 |
| 175e09 | 53604 | 51062 | 52799 | 49656 | 50020.2 | 49642 | 49843 |
| 175e10 | 52040 | 52212 | 54444.5 | 51238 | 51853.3 | 51196 | 51727.3 |
| 175e11 | 56416 | 56646 | 58545.7 | 54480 | 55285.8 | 54674 | 55182.8 |
| 175e12 | 59704 | 57914 | 60503.8 | 57350 | 57849.8 | 57298 | 57849.7 |
| 175e13 | 60276 | 59646 | 60834.3 | 58532 | 58960.4 | 58510 | 58791.9 |
| 175e14 | 55736 | 53334 | 55343.5 | 52570 | 52934 | 52592 | 52830.5 |
| 175e15 | 49920 | 49002 | 51816 | 47116 | 48404.5 | 47270 | 48513 |

## TABLE V

| Instance | | VΔC | | SAM | | BM$ | |
|---|---|---|---|---|---|---|---|
| ID | BKS | Best | Avg. | Best | Avg. | Best | Avg. |
| 175e16 | 57266 | 58256 | 59972.3 | 56032 | 57010.5 | 56074 | 56679.1 |
| 175e17 | 59022 | 57486 | 59498.6 | 57268 | 57698.5 | 57220 | 57488 |
| 175e18 | 52152 | 48650 | 51128.6 | 47972 | 48653.7 | 47972 | 48516.2 |
| 175e19 | 52526 | 51354 | 52812.2 | 50058 | 50462.2 | 50028 | 50405.8 |
| 175e20 | 57014 | 56264 | 58077.6 | 55416 | 55958.9 | 55350 | 55849.2 |
| 343e01 | 145862 | 144520 | 147630 | 142722 | 144527.6 | 141086 | 142744.8 |
| 343e02 | 154018 | 152088 | 156266.8 | 150820 | 152842.2 | 148992 | 151511 |
| 343e03 | 144278 | 144512 | 147234.4 | 142794 | 145260.4 | 141554 | 143970.6 |
| 343e04 | 162092 | 157332 | 162707.2 | 155560 | 158720.8 | 154426 | 156751.8 |
| 343e05 | 142110 | 142122 | 147497.6 | 142412 | 144796.9 | 141154 | 142817.5 |
| 343e06 | 144274 | 144246 | 148459 | 142082 | 144623.2 | 141036 | 142987.3 |
| 343e07 | 154776 | 149286 | 152938.5 | 147674 | 149759.8 | 143920 | 147737.2 |
| 343e08 | 133770 | 135418 | 138998.6 | 133010 | 135802 | 132362 | 134268.3 |
| 343e09 | 143018 | 142878 | 145563.8 | 139434 | 142843.3 | 139180 | 141779.3 |
| 343e10 | 152828 | 150402 | 154161.7 | 148594 | 151065 | 147396 | 149856.6 |
| 343e11 | 146446 | 147372 | 151589.5 | 146962 | 149164.5 | 144464 | 147992.8 |
| 343e12 | 162954 | 159152 | 162883 | 158634 | 160999.6 | 155362 | 158808.1 |
| 343e13 | 137836 | 134788 | 138898.4 | 132000 | 134749.2 | 130316 | 132892.4 |
| 343e14 | 150428 | 148328 | 151864.3 | 147202 | 149033.3 | 145432 | 147836.2 |
| 343e15 | 156682 | 154476 | 156415.2 | 151720 | 154195.5 | 148698 | 151749.4 |
| 343e16 | 154264 | 151056 | 154848 | 150096 | 152788.8 | 150036 | 151375.4 |
| 343e17 | 136650 | 132666 | 137286 | 130836 | 134148.6 | 129994 | 132600.4 |
| 343e18 | 136694 | 136898 | 140117.2 | 134794 | 138161.3 | 132950 | 135916.1 |
| 343e19 | 150486 | 146298 | 151841.2 | 147720 | 149394.5 | 145110 | 147864.4 |
| 343e20 | 151552 | 149266 | 152311.3 | 146980 | 149667.8 | 146414 | 148606.6 |
| 729e01 | 448014 | 437614 | 446990.1 | 427496 | 436958.5 | 422118 | 433695.5 |
| 729e02 | 445356 | 446464 | 451759.7 | 440548 | 445312.4 | 436644 | 442884.1 |
| 729e03 | 427076 | 413550 | 427437.8 | 412272 | 421754.2 | 414192 | 418740.6 |
| 729e04 | 431496 | 425382 | 432978.9 | 418366 | 425721.6 | 419260 | 424187.5 |
| 729e05 | 444704 | 438446 | 443829.2 | 424066 | 433764.9 | 422122 | 432819.3 |
| 729e06 | 442248 | 435328 | 441896.6 | 431860 | 436310 | 425206 | 434288 |
| 729e07 | 428644 | 425690 | 432078.7 | 418244 | 429251.7 | 412706 | 423293.8 |
| 729e08 | 425694 | 425314 | 431622 | 412132 | 422361 | 411066 | 418731 |
| 729e09 | 395656 | 397344 | 402426.6 | 386572 | 396127.1 | 385582 | 392344.2 |
| 729e10 | 431938 | 430642 | 436726.8 | 423764 | 430514.1 | 421430 | 428517.8 |

It is confirmed that the SAM and BM$ methods are able to improve the BKS of all but four instances and also have an average cost lower than the previous BKS, despite their short run-time.

(Scaling Analysis)

Considering the benchmark results and the qualitative comparisons of the VΔC and SAM methods, it appears that the SAM method is more efficient. This is because the VΔC method performs serial reordering of elements of the vector ΔD in every iteration, whereas the SAM method only performs reordering of the matrices $D^X$ and $D^S$ to match an assignment state only when a proposed assignment change is accepted.

The relative performance of the SAM and BM$ methods depends mainly on PAR. PAR may depend greatly on a search algorithm being used. Furthermore, even within the same search algorithm, PAR may vary throughout the run-time of an algorithm like a simulated annealing algorithm, and between search instances concurrently run in parallel tempering.

The following describes a comparison result of run-times according to problem size and PAR value.

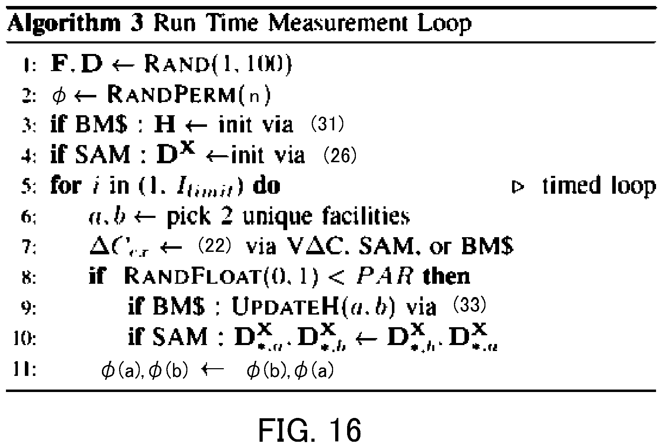

FIG. 16 illustrates an example of a measurement algorithm.

The measurement algorithm first generates a flow matrix (F) and distance matrix (D) with random numbers in the range of 1 to 100, and initializes an assignment state (φ). The measurement algorithm then runs a loop a preset

number of iterations ($I_{limit}$) and measures the run-time of the loop. At this time, proposals are randomly accepted at desired PAR values.

Problem sizes were divided into three groups based on which memory tier stores replica data for the SAM and BM$ methods. In the problem sizes of n < 256 and 256 < n < 1024, $I_{limit}$ values of 100M and 10M were used, respectively. In the problem sizes of n > 1024, an $I_{limit}$ value of 1M was used.

In each iteration, a $\Delta C_{ex}$ value is calculated, and a random number generator is used to determine at a desired PAR whether to accept a proposal.

In order to measure performance while the CPU pipelines, cache, and memory were put under full load, 64 loop instances were executed in parallel (one per core). This process is repeated with 10 different random seeds for each data point, and the average run-time was measured.

Two separate sets of simulation were carried out since the density of the flow matrix affects the update function for the cache matrix (H) of the BM$ method. One has a fully dense flow matrix, and the other has a sparse flow matrix with only 10% non-zero values. Each measurement simulated a total of 290 parameter combinations, combining 10 problem sizes in the range of n = [100, 5000] and 29 PAR values in the range of PAR = [0.0001, 0.1].

FIG. 17 illustrates the relative speed-ups measured between the $V\Delta C$, SAM, and BM$ methods and the memory tier occupancy based on problem size. In each graph representing the speed-ups, the horizontal axis represents PAR [%], whereas the vertical axis represents speed-ups. FIG. 17 presents the speed-ups of the BM$ method relative to the SAM and $V\Delta C$ methods, measured using flow matrices with different densities. FIG. 17 also presents the speed-ups of the SAM method relative to the $V\Delta C$ method. In the example of FIG. 17, the memory tiers include L2 cache, L3 cache, and DRAM in ascending order of memory capacity.

By the way, the maximum PAR values for the densities of certain flow matrices in non-load-balanced parallel tempering simulations on 10 QAP instances are presented in Table 6.

## TABLE VI: Max *PAR* Values Across PT Replicas (QAP)

| Instance | F Density | Max PAR |
|----------|-----------|---------|
| sko81 | 99% | 4.55% |
| sko90 | 99% | 4.00% |
| sko100a | 99% | 4.52% |
| tai60b | 98% | 0.53% |
| tai80b | 99% | 0.26% |

| Instance | F Density | Max PAR |
|----------|-----------|---------|
| tai100b | 99% | 0.18% |
| tai125e01 | 53% | 0.25% |
| tai175e01 | 53% | 0.07% |
| tai343e01 | 52% | 0.10% |
| tai729e01 | 51% | 0.09% |

QSAP simulations are omitted as they are similar to the QAP simulations, and there would not have been a significant difference between their simulation results.

The relative speed-ups across problem sizes may be divided into three groups, based on which memory tier stores the majority of search data. Each core has a dedicated L2 cache (256 kB memory capacity in this simulation example), and a group of four cores shares a L3 cache (16 MB memory capacity in this simulation example).

As seen in FIG. 17, in the case of the SAM and BM$ methods, the matrix $D^X$ and cache matrix (H) for each loop thread fit in a core's L2 cache for problem sizes up to n = 256, and fit in the L3 cache for problem sizes up to n = 1024.

As seen in FIG. 17, as the problem size increases, which needs a memory tier with a larger capacity, the relative performance (speed-ups) between the BM$ method and the two other methods drops. When the search data is moved to a higher memory tier, the PAR values needed for the BM$ method to maintain the performance better than the SAM and $V\Delta C$ methods decrease dramatically.

In the case of a solver that performs parallel tempering, the maximum PAR value across all replicas does not necessarily decrease with problem size across instance families, as seen in Table 6. This indicates that, for smaller QAP instances, the relation between PAR and problem size to maintain the same relative speed-ups as illustrated in Table 2 does not necessarily depend on the relation illustrated in FIG. 17.

The speed-ups of the SAM method relative to the $V\Delta C$ method are divided into two groups according to problem size. In the case where problem sizes are n ≤ 800 and the majority of the matrix $D^X$ for each loop instance fits in a cache, the SAM method has a clear advantage over the $V\Delta C$ method when PAR < 10%. The movement of storage of search data from the L2 cache to the L3 cache has no significant effect on the relative performance between the two methods.

(Hardware Examples)

The following describes hardware examples for implementing the SAM method.

In the following, it is assumed that both the flow and distance matrices are symmetric matrices (with the diagonal elements being 0 (bias-less)), in order to simplify the description, as this applies to the majority of QAP instances and also simplifies the mathematical calculations, as described earlier. Note that QAP with symmetric matrices is directly transferable to QAP with asymmetric matrices.

The evaluation function for QAP with only symmetric matrices is defined by equation (40).

$$C(\phi) = \sum_{i=1}^{n} \sum_{j=i}^{n} f_{i,j} d_{\phi(i),\phi(j)} \tag{40}$$

Equation (40) is different from equation (1) only in that "j = 1" in equation (1) is changed to "j = i."

In the case of using the evaluation function of equation (40), $\Delta C_{ex}$, which is calculated in the QAP, is given by equations (41) and (42), instead of equations (19) and (22).

$$\Delta C_{ex} = \sum_{i=1}^{n} (d_{\phi(a),i} - d_{\phi(b),i}) \times (f_{b,i} - f_{a,i}) \tag{41}$$
$$+ 2 f_{a,b} d_{\phi(a),b}$$

$$\Delta C_{ex} = \Delta_{\phi(b)}^{\phi(a)} \mathbf{D^X} \cdot \Delta_a^b \mathbf{F} + 2 f_{a,b} d_{\phi(a),b} \tag{42}$$

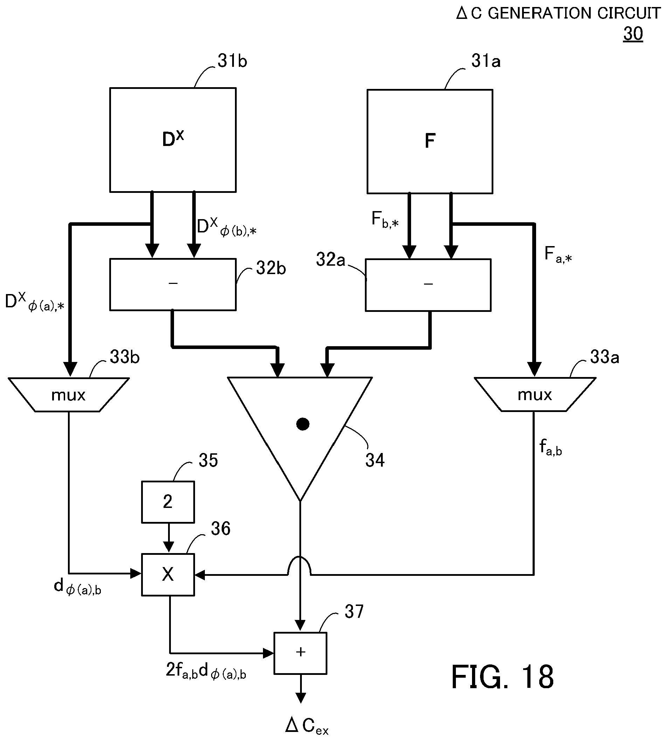

FIG. 18 illustrates an example of a $\Delta C$ generation circuit.

The $\Delta C$ generation circuit 30 includes a flow matrix memory 31a, a state-aligned D matrix memory 31b, differential calculation circuits 32a and 32b, multiplexers 33a and 33b, a dot product circuit 34, a register 35, a multiplier circuit 36, and an adder circuit 37. For example, these units are circuits and memories included in the storage unit 11 and processing unit 12 illustrated in FIG. 2.

The flow matrix memory 31a holds a flow matrix (F).

The state-aligned D matrix memory 31b holds a state-aligned D matrix ($D^X$) that is an update of a distance matrix.

In the example of FIG. 18, the flow matrix memory 31a and state-aligned D matrix memory 31b are dual-port memories with two ports. On some FPGAs, such dual-port memories are usable.

The differential calculation circuit 32a calculates $F_{b,*} - F_{a,*}$, which is $\Delta_a^b F$ of equation (42).

The differential calculation circuit 32b calculates $D^X_{\varphi(a),*} - D^X_{\varphi(b),*}$, which is $\Delta^{\varphi(a)}_{\varphi(b)} D^X$ of equation (42).

The multiplexer 33a selects $f_{a,b}$ from $F_{a,*}$ and outputs it.

The multiplexer 33b selects $d_{\varphi(a),b}$ from $D^X_{\varphi(a),*}$ and outputs it.

The dot product circuit 34 calculates the dot product of $\Delta_a^b F$ and $\Delta^{\varphi(a)}_{\varphi(b)} D^X$. The dot product circuit 34 is implemented by a plurality of multipliers connected in parallel, for example.

The register 35 holds a coefficient "2" included in equation (42).

The multiplier circuit 36 calculates $2 f_{a,b} d_{\varphi(a),b}$.

The adder circuit 37 adds $2 f_{a,b} d_{\varphi(a),b}$ to the calculated dot product to obtain $\Delta C_{ex}$ and outputs $\Delta C_{ex}$.

For example, the $\Delta C_{ex}$ calculation using the above hardware is controlled by a control circuit (not illustrated) included in the processing unit 12 of FIG. 2 running a program.

As described earlier, in the SAM method, when a proposal for an exchange of the destinations of entities (assignment change), which causes $\Delta C_{ex}$, is made and accepted, columns of the state-aligned D matrix are swapped to correspond to the accepted assignment state.

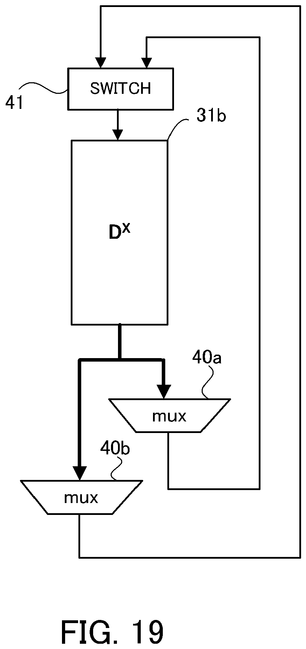

FIG. 19 illustrates a first example of a hardware configuration for column swapping.

As illustrated in FIG. 19, the column swapping of the state-aligned D matrix stored in the state-aligned D matrix memory 31b may be performed by using multiplexers 40a and 40b and a switch 41, for example. These circuits may be included in the processing unit 12 of FIG. 2.

The multiplexer 40a sequentially selects the value of a first column from each row of the state-aligned D matrix read for the swapping from the state-aligned D matrix memory 31b, and outputs the value.

The multiplexer 40b sequentially selects the value of a second column from each row of the state-aligned D matrix read from the state-aligned D matrix memory 31b, and outputs the value.

The switch 41 writes, in the state-aligned D matrix memory 31b, the value output from the multiplexer 40a at a place where the value output from the multiplexer 40b has been stored and writes the value output from the multiplexer 40b at a place where the value output from the multiplexer 40a has been stored, so as to exchange their storage locations.

For example, the column swapping using the above hardware is controlled by a control circuit (not illustrated) included in the processing unit 12 of FIG. 2 running a program.

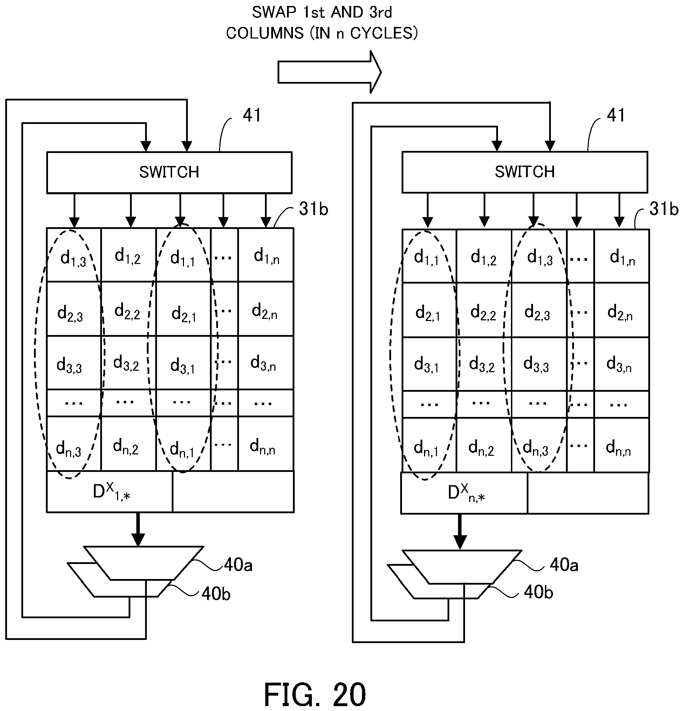

FIG. 20 illustrates an example of the column swapping. In the example of FIG. 20, the first and third columns are swapped.

First, the multiplexers 40a and 40b select $d_{1,3}$ and $d_{1,1}$, and the switch 41 exchanges their storage locations. Then, the multiplexers 40a and 40b select $d_{2,3}$ and $d_{2,1}$, and the switch 41 exchanges their storage locations. Such location exchange is repeated n cycles in total, so that the column swapping is complete.

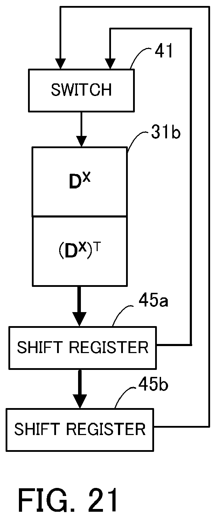

FIG. 21 illustrates a second example of the hardware configuration for the column swapping. In FIG. 21, the same reference numerals are given to the same components as illustrated in FIG. 19.

As illustrated in FIG. 21, the state-aligned D matrix memory 31b stores the transposed matrix $((D^X)^T)$ of the state-aligned D matrix, in addition to the state-aligned D matrix. For example, the column swapping of the state-aligned D matrix is performed using read elements of the transposed matrix by using shift registers 45a and 45b, as well as the above-described switch 41. These circuits may be included in the processing unit 12.

In the circuit configuration of FIG. 21, two rows of the transposed matrix corresponding to two columns of the state-aligned D matrix to be swapped are read from the state-aligned D matrix memory 31b.

The shift register 45a holds the n values of a first row of the two rows of the transposed matrix read from the state-aligned D matrix memory 31b, and outputs them, one in each cycle, while shifting.

The shift register 45b holds the n values of a second row of the two rows of the transposed matrix read from the state-aligned D matrix memory 31b, and outputs them, one in each cycle, while shifting.

The switch 41 exchanges the storage locations by writing the value output from the shift register 45a at a place where the value output from the shift register 45b has been stored and writing the value output from the shift register 45b at a place where the value output from the shift register 45a has been stored, in the state-aligned D matrix memory 31b.

The column swapping is completed in n cycles with the above hardware configuration. In addition, the hardware configuration of FIG. 21 may have improved wiring compared with that of FIG. 19, and also does not need the multiplexers 40a and 40b of FIG. 19, which may increase a circuit scale.

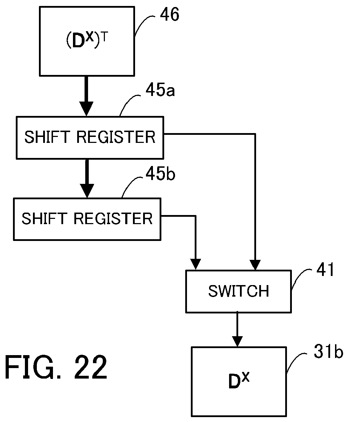

FIG. 22 is a first variant of the second example of the hardware configuration for the column swapping. In FIG. 22, the same reference numerals are given to the same components as illustrated in FIG. 21.

The hardware configuration of FIG. 22 is different from that of FIG. 21 in that a transposed matrix memory 46 independent of the state-aligned D matrix memory 31b is additionally provided to store the transposed matrix $((D^X)^T)$ of the state-aligned D matrix. The above-described two rows of the transposed matrix are read from the transposed matrix memory 46. The other part of the configuration is the same as described above with reference to FIG. 21.

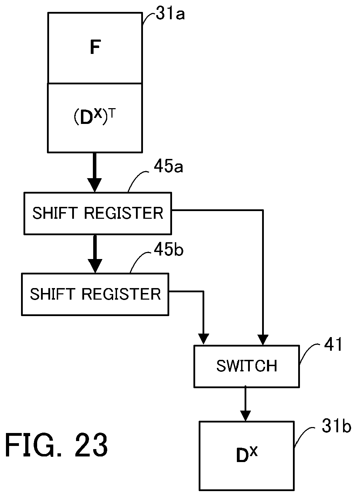

FIG. 23 is a second variant of the second example of the hardware configuration for the column swapping. In FIG. 23, the same reference numerals are given to the same components as illustrated in FIG. 22.

In the hardware configuration of FIG. 23, the transposed matrix $((D^X)^T)$ of the state-aligned D matrix is stored in addition to the flow matrix in the flow matrix memory 31a illustrated in FIG. 18. The column swapping of the state-aligned D matrix is performed using elements of the transposed matrix read from the flow matrix memory 31a, by using the switch 41 and shift registers 45a and 45b as described above.

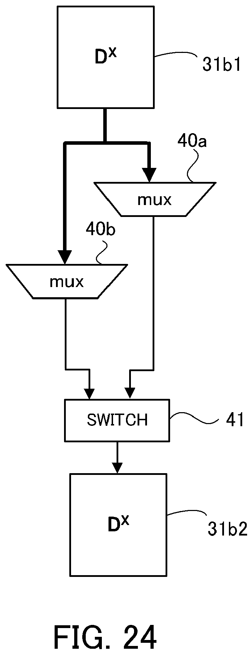

FIG. 24 is a third example of the hardware configuration for the column swapping. In FIG. 24, the same reference numerals are given to the same components as illustrated in FIG. 19.

In the hardware configuration of FIG. 24, the state-aligned D matrix is stored in two state-aligned D matrix memories 31b1 and 31b2.

The column swapping of the state-aligned D matrix stored in the state-aligned D matrix memory 31b2 is performed using the elements of each row of the state-aligned D matrix read from the state-aligned D matrix memory 31b1 in the same manner as done using the hardware configuration of FIG. 19.

A copy of the state-aligned D matrix after the column swapping is stored in the state-aligned D matrix memory 31b1.

The column swapping is completed in n cycles with the above hardware configuration. In addition, the hardware configuration of FIG. 24 may have improved wiring compared with that of FIG. 19.

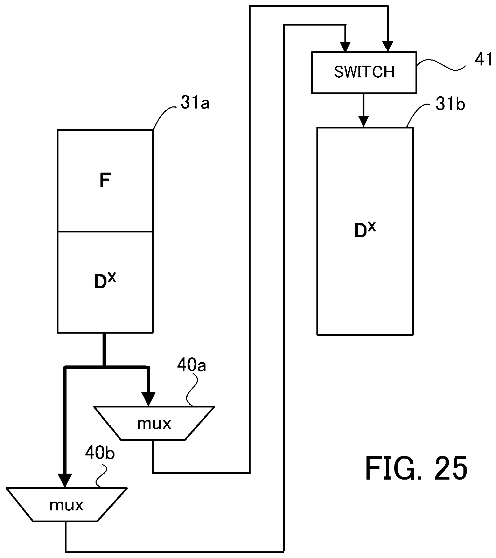

FIG. 25 is a variant of the third example of the hardware configuration for the column swapping. In FIG. 25, the same reference numerals are given to the same components as illustrated in FIG. 19.

In the hardware configuration of FIG. 25, the transposed matrix $((D^X)^T)$ of the state-aligned D matrix is stored in addition to the flow matrix in the flow matrix memory 31a illustrated in FIG. 18. The column swapping of the state-aligned D matrix is performed using elements of the transposed matrix read from the flow matrix memory 31a, by using the multiplexers 40a and 40b and the switch 41 as described above.

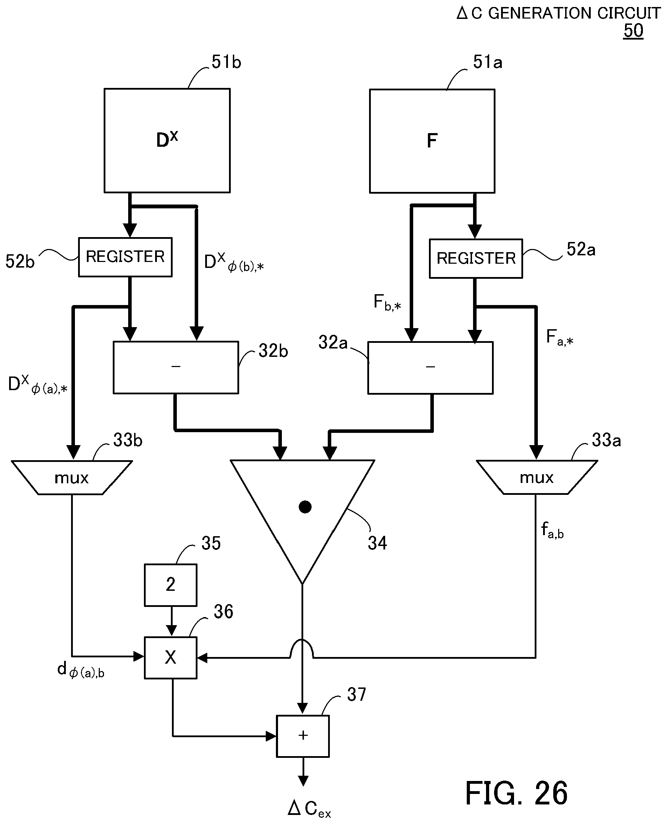

FIG. 26 illustrates another example of the ΔC generation circuit. In FIG. 26, the same reference numerals are given to the same components as illustrated in FIG. 18.

The ΔC generation circuit 50 of FIG. 26 uses single-port memories as a flow matrix memory 51a and a state-aligned D matrix memory 51b. In this case, a register 52a is used, which holds $F_{a,*}$, and outputs and supplies $F_{a,*}$ to the differential calculation circuit 32a and multiplexer 33a when $F_{b,*}$ is read from the flow matrix memory 51a. In addition, a register 52b is used, which holds $D^X_{\varphi(a),*}$, and outputs and supplies $D^X_{\varphi(a),*}$ to the differential calculation circuit 32b and multiplexer 33b when $D^X_{\varphi(b),*}$ is read from the state-aligned D matrix memory 51b.

The other part of the configuration is the same as described above with reference to FIG. 18.

By the way, by applying any of the hardware configurations for the column swapping, illustrated in FIGS. 21 to 24, to either the ΔC generation circuit 30 illustrated in FIG. 18 or the ΔC generation circuit 50 illustrated in FIG. 26, two replicas are able to run simultaneously.

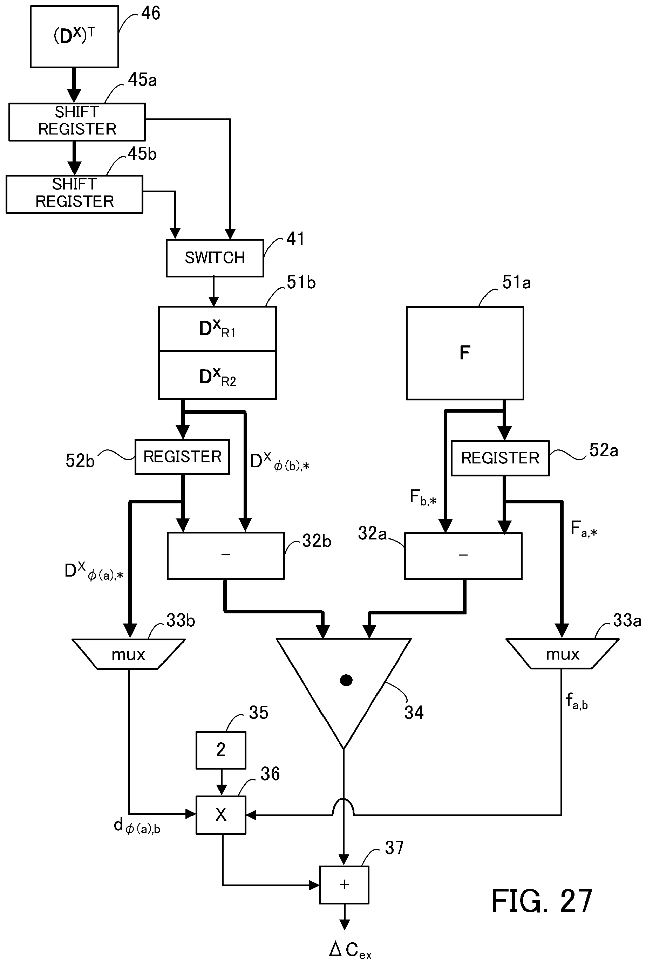

FIG. 27 illustrates an example of a hardware configuration for allowing two replicas to run. FIG. 27 illustrates a combination of the hardware configuration of FIG. 22 for the column swapping with the ΔC generation circuit 50 of FIG. 26.

In the example of FIG. 27, state-aligned D matrices ($D^X_{R1}$ and $D^X_{R2}$) for two replicas (R1 and R2) are stored in the state-aligned D matrix memory 51b.

An assignment change for one replica is accepted, and the one replica performs column swapping using the write port of the state-aligned D matrix memory 51b. During this process, the other replica calculates ΔC$_{ex}$ based on the elements of the state-aligned D matrix read from the read port of the state-aligned D matrix memory 51b.

When neither of the replicas is performing an update process, one replica stalls while the other replica calculates ΔC$_{ex}$.

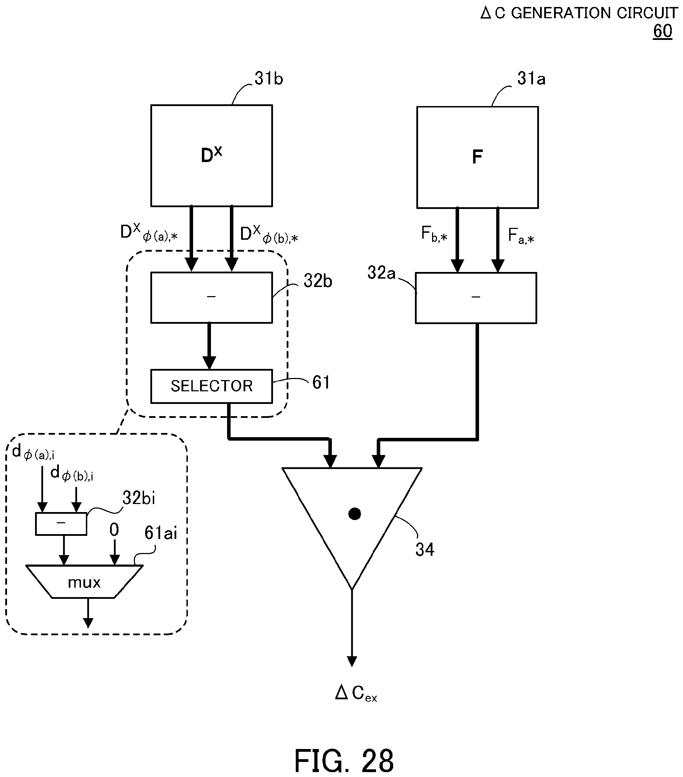

FIG. 28 illustrates another example of the ΔC generation circuit. In FIG. 28, the same reference numerals are given to the same components as illustrated in FIG. 18.

The ΔC generation circuit 60 illustrated in FIG. 28 may be usable when symmetric permutation problems are to be solved and ΔC$_{ex}$ is calculated from equation (43).

$$\Delta C_{ex} = \sum_{i=1, i \neq a,b}^{n} (f_{b,i} - f_{a,i})(d_{\phi(a),i} - d_{\phi(b),i}) \qquad (43)$$

The ΔC generation circuit 60 does not need to have the multiplexers 33a and 33b as illustrated in FIG. 18, but needs a selector 61 instead.

For example, the differential calculation circuit 32b has n subtractors 32bi for calculating $d_{\varphi(a),i} - d_{\varphi(b),i}$, and the selector 61 has n multiplexers 61ai with two inputs and one output, each for selecting and outputting one of an output from a subtractor 32bi and 0.

The multiplexers 61ai output 0 when i = a and b in equation (43). Instead of the method using the multiplexers, another method may be employed to output 0.

(Replica Processing Circuit)

A circuit for running replicas is implemented by combining any of the above-described ΔC generation circuits 40, 50, and 60 and any of the above-described hardware configurations for the column swapping of the state-aligned D matrix.

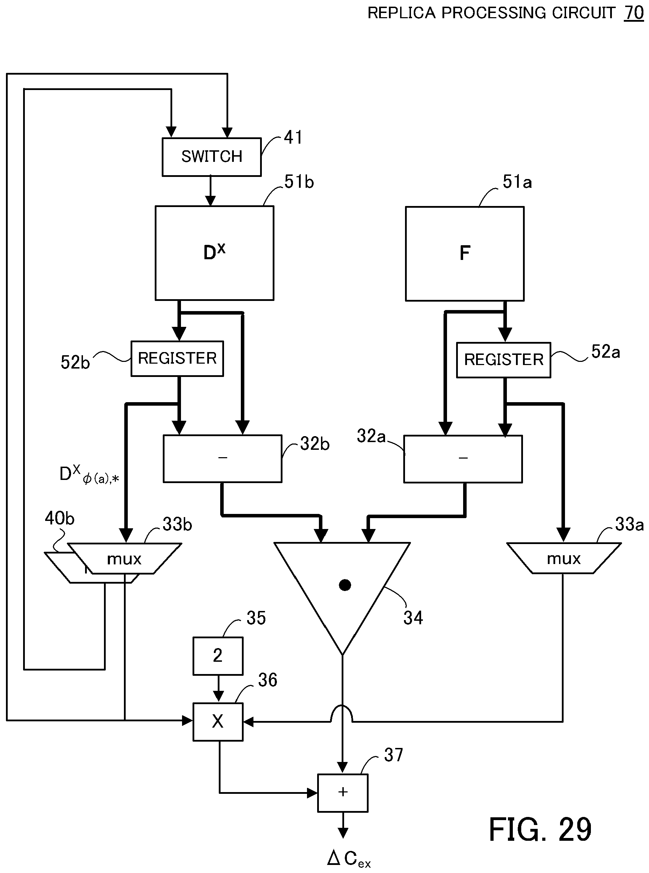

FIG. 29 illustrates an example of a replica processing circuit. As an example, FIG. 29 illustrates a replica processing circuit 70 that is a combination of the hardware configuration of FIG. 19 for the column swapping with the ΔC generation circuit 50 of FIG. 26. In FIG. 29, the same reference numerals are given to the same components as illustrated in FIGS. 19 and 26.

In the example of FIG. 29, the multiplexer 33b also has the functions of the multiplexer 40a illustrated in FIG. 19.

These circuits may be included in the storage unit 11 and processing unit 12 of FIG. 2.

In this connection, a configuration for storing an integer assignment vector φ representing an assignment state, a configuration for determining whether to accept a proposal for an assignment change that causes calculated ΔC$_{ex}$, and others are not illustrated.

(Extension to Support QAP When Asymmetric Matrices are Used)

In solving QAP with asymmetric matrices (with non-zero diagonal elements), ΔC$_{asym}$ that corresponds to Δ C$_{ex}$ calculated in the case of using symmetric matrices is given by equation (44).

$$\Delta C_{asym} = \sum_{i=1}^{n} (d_{\phi(a),i}^{T} - d_{\phi(b),i}^{T})(f_{b,i}^{T} - f_{a,i}^{T}) \tag{44}$$

$$+ \sum_{i=1}^{n} (d_{\phi(a),i} - d_{\phi(b),i})(f_{b,i} - f_{a,i})$$

$$+ (f_{b,b} - f_{a,a})(d_{\phi(a),\phi(a)} - d_{\phi(b),\phi(b)})$$

$$+ (f_{b,a} - f_{a,b})(d_{\phi(a),\phi(b)} - d_{\phi(b),\phi(a)})$$

A replica processing circuit for calculating $\Delta C_{asym}$ is implemented by a replica processing circuit for calculating $\Delta C_{ex}$.

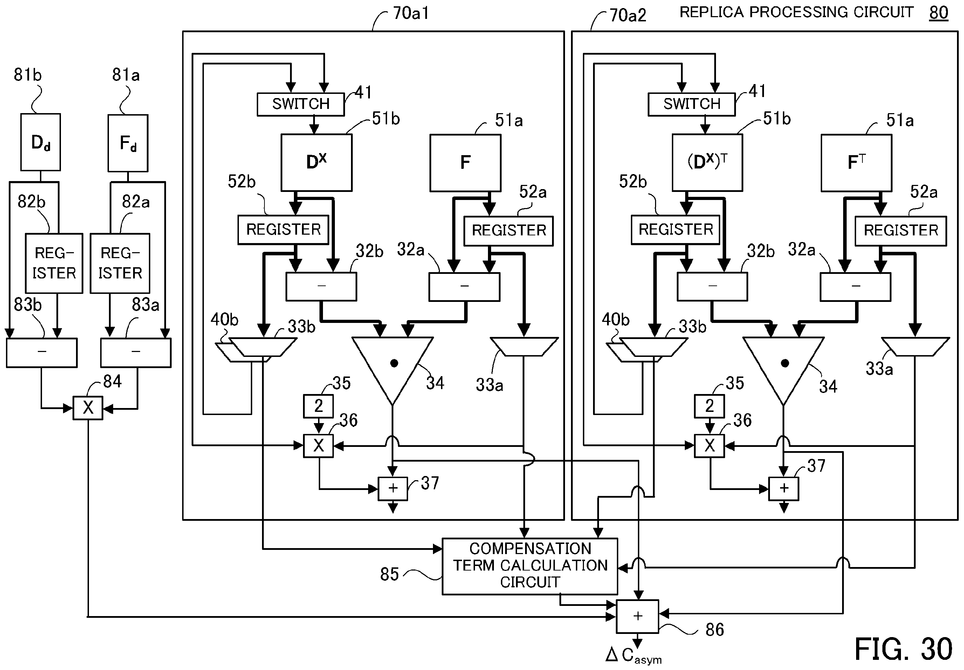

FIG. 30 illustrates an example of a replica processing circuit that is used for solving QAP with asymmetric matrices. In FIG. 30, the same reference numerals are given to the same components as illustrated in FIG. 29.

The replica processing circuit 80 for calculating $\Delta C_{asym}$ has two replica processing circuits 70a1 and 70a2 illustrated in FIG. 29 for calculating $\Delta C_{ex}$. Note that the flow matrix memory 51a of one replica processing circuit 70a2 holds the transposed matrix ($F^{T}$) of a flow matrix and the state-aligned D matrix memory 51b of the replica processing circuit 70a2 holds the transposed matrix (($D^{X}$)$^{T}$) of a state-aligned D matrix.

The replica processing circuit 80 additionally includes memories 81a and 81b, registers 82a and 82b, differential calculation circuits 83a and 83b, a multiplier circuit 84, a compensation term calculation circuit 85, and an adder circuit 86.

The memory 81a holds the diagonal elements ($F_d$) of the flow matrix, and the memory 81b holds the diagonal elements ($D_d$) of a distance matrix. Unlike symmetric matrices, the asymmetric matrices may include non-zero diagonal elements.

The register 82a holds one of $f_{a,a}$ and $f_{b,b}$ read from the memory 81a. The register 82a outputs and supplies the held $f_{a,a}$ or $f_{b,b}$ to the differential calculation circuit 83a when the other of $f_{a,a}$ and $f_{b,b}$ is read from the memory 81a.

The register 82b holds one of $d_{\varphi(a),\varphi(a)}$ and $d_{\varphi(b),\varphi(b)}$ read from the memory 81b. The register 82b outputs and supplies the held $d_{\varphi(a),\varphi(a)}$ or $d_{\varphi(b),\varphi(b)}$ to the differential calculation circuit 83b when the other of $d_{\varphi(a),\varphi(a)}$ and $d_{\varphi(b),\varphi(b)}$ is read from the memory 81b.

The differential calculation circuit 83a calculates $f_{b,b} - f_{a,a}$ of equation (44).

The differential calculation circuit 83b calculates $d_{\varphi(a),\varphi(a)} - d_{\varphi(b),\varphi(b)}$ of equation (44).

The multiplier circuit 84 calculates ($f_{b,b} - f_{a,a}$) ($d_{\varphi(a),\varphi(a)} - d_{\varphi(b),\varphi(b)}$) on the basis of the calculation results of the differential calculation circuits 83a and 83b.

The compensation term calculation circuit 85 calculates a compensation term (to compensate for removal of the condition where calculations for i = a and b are skipped), which is the fourth term of the right side of equation (44). To calculate the compensation term, the compensation term calculation circuit 85 receives $f_{a,b}$ and $d_{\varphi(a),\varphi(b)}$ from the multiplexers 33a and 33b of the replica processing circuit 70a1 and receives $f_{b,a}$ and $d_{\varphi(b),\varphi(a)}$ from the multiplexers 33a and 33b of the replica processing circuit 70a2.

The adder circuit 86 receives the value of the first term of the right side of equation (44) from the dot product circuit 34 of the replica processing circuit 70a1, and receives the value of the second term of the right side of equation (44) from the dot product circuit 34 of the replica processing circuit 70a2. In addition, the adder circuit 86 receives the value of the third term of the right side of equation (44) from the multiplier circuit 84 and the value of the fourth term of the right side of equation (44) from the compensation term calculation circuit 85. Then, the adder circuit 86 calculates the sum of them to generate $\Delta C_{asym}$ and outputs $\Delta C_{asym}$.

These circuits and memories may be included in the storage unit 11 and processing unit 12 of FIG. 2.

In this connection, a configuration for storing an integer assignment vector $\varphi$ representing an assignment state, a configuration for determining whether to accept a proposal for an assignment change that causes calculated $\Delta C_{ex}$, and others are not illustrated.

With the above-described hardware configurations, local search is performed with the SAM method for QAP. Configurations for local search with the SAM method for QSAP may be implemented by modifying the above-described hardware configurations as appropriate. For example, operational circuits (multiplier circuit, adder circuit, and others) for performing calculation of the second line of equation (24) is added.

In this connection, the above-described processing functions (for example, FIGS. 6 to 8, 10, 11, and others) may be implemented in software by the data processing apparatus 10 running programs.

The programs may be stored in a computer-readable storage medium. Storage media include magnetic disks, optical discs, magneto-optical (MO) disks, semiconductor memories, and others, for example. The magnetic disks include flexible disks (FDs) and HDDs. The optical discs include compact discs (CDs), CD-recordable (CD-Rs), CD-rewritable (CD-RWs), digital versatile discs (DVDs), DVD-Rs, DVD-RWs, and others. The programs may be stored in portable storage media, which are then distributed. In this case, the programs may be copied from the portable storage media to other storage media.

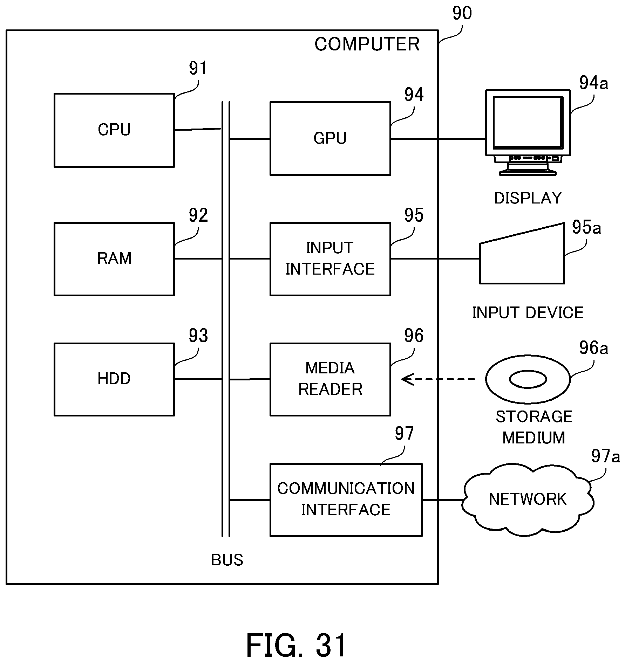

FIG. 31 illustrates an example of hardware of a computer, which is an example of the data processing apparatus.

The computer 90 includes a CPU 91, a RAM 92, an HDD 93, a GPU 94, an input interface 95, a media reader 96, and a communication interface 97. These units are connected to a bus.

The CPU 91 is a processor including operational circuits that execute program instructions. The CPU 91 loads at least part of a program or data from the HDD 93 to the RAM 92 and executes the program. For example, the CPU 91 may include a plurality of processor cores to run a plurality of replicas in parallel, as illustrated in FIG. 4. The computer 90 may include a plurality of processors. A set of multiple processors (multiprocessor) may be called a "processor."

The RAM 92 is a volatile semiconductor memory that temporarily stores a program to be executed by the CPU 91 or data to be used by the CPU 91 in processing. The computer 90 may include another type of memory than the RAM 92 or include a plurality of memories.

The HDD 93 is a non-volatile storage device that holds software programs, such as operating system (OS), middleware, and application software, and data. For example, the programs include a program that causes the computer 90 to find solutions to assignment problems as described above. In this connection, the computer 90 may include another type of storage device, such as a flash memory or a solid state drive (SSD), or may include a plurality of non-volatile storage devices.

The GPU 94 outputs images (an image indicating a result of solving an assignment problem, for example) to a display 94a connected to the computer 90 in accordance with instructions from the CPU 91. A cathode ray tube (CRT) display, a liquid crystal display (LCD), a plasma display panel (PDP), an organic electroluminescence (OEL) display, or the like may be used as the display 94a.

The input interface 95 receives an input signal from an input device 95a connected to the computer 90 and outputs it to the CPU 91. A pointing device such as a mouse, a touch panel, a touch pad, or a track ball, a keyboard, a remote controller, a button switch, or the like may be used as the input device 95a. In addition, two or more types of input devices may be connected to the computer 90.

The media reader 96 is a reading device that reads programs and data from a storage medium 96a. A magnetic disk, optical disc, MO disk, semiconductor memory, or the like may be used as the storage medium 96a. Magnetic disks include FDs and HDDs. Optical discs include CDs and DVDs.

For example, the media reader 96 copies a program and data read from the storage medium 96a to another storage medium such as the RAM 92 or the HDD 93. The program read is executed by the CPU 91, for example. The storage medium 96a may be a portable storage medium and be used for distributing the program and data. The storage medium 96a and HDD 93 may be referred to as computer-readable storage media.

The communication interface 97 is connected to a network 97a and communicates with other information processing apparatuses over the network 97a. The communication interface 97 may be a wired communication interface connected to a communication device such as a switch by a cable or a wireless communication interface connected to a base station by a wireless link.

One aspect of the computer program, data processing apparatus, and data processing method has been described with reference to the embodiment. The disclosure, however, is just an example and is not limited to the above description.

For example, the above description describes swapping columns of a distance matrix according to an assignment state, but with the above-described equations modified as appropriate, the swapping of rows of the distance matrix according to the assignment state provides the same operations and effects.

According to one aspect, assignment problems are solved at high speed.

## Claims

1. A computer program that causes a computer to perform a process of finding a solution to an assignment problem with local search using an evaluation function representing a cost of an assignment state, the process comprising:

calculating a first change in the evaluation function using a vector arithmetic operation based on a flow matrix and a distance matrix stored in a memory (11), the flow matrix representing flows between a plurality of entities to be assigned to a plurality of destinations, the distance matrix representing distances between the plurality of destinations, the first change being to be caused by a first assignment change of exchanging destinations of a first entity and a second entity among the plurality of entities;

determining based on the first change whether to accept the first assignment change; and
updating, upon determining to accept the first assignment change, the assignment state and updating the distance matrix by swapping two columns or two rows of the distance matrix corresponding to the first entity and the second entity.

2. The computer program according to claim 1, wherein, when the assignment problem is a quadratic assignment problem (QAP), whether to accept the first assignment change is determined based on a comparison between an acceptance rate and a random number, the acceptance rate being calculated based on the first change and a temperature parameter value.

3. The computer program according to claim 1, wherein, when the assignment problem is a quadratic semi-assignment problem (QSAP), the process further includes

   before calculating the first change,

      calculating a second change in the evaluate function, the second change being to be caused by a second assignment change of assigning the first entity to a first destination,
      determining whether to accept the second assignment change, based on a comparison between an acceptance rate and a random number, the acceptance rate being calculated based on the second change and a temperature parameter value, and
      updating, upon determining to accept the second assignment change, the assignment state and the distance matrix, and

   after calculating the first change, determining whether to accept the first assignment change, based on a comparison between the first change and a predetermined value.

4. The computer program according to claim 1, wherein the two columns are swapped by repeatedly

   reading each row of the distance matrix, one row at a time, from the memory,
   selecting two values of the two columns included in the read row, and
   writing the two values with storage locations of the two values swapped in the memory.

5. The computer program according to claim 1, wherein

   the memory further holds a transposed matrix of the distance matrix, and
   the two columns are swapped by

      storing a first row and a second row of two rows of the transposed matrix corresponding to the two columns of the distance matrix in a first shift register and a second shift register, respectively, and
      repeatedly writing two values output at a time respectively from the first shift register and the second shift register with storage locations of the two values swapped in the memory.

6. The computer program according to claim 1, wherein

   the memory includes a first memory and a second memory to hold the distance matrix, and
   the two columns are swapped by repeatedly

      reading each row of the distance matrix, one row at a time, from the first memory,
      selecting two values of the two columns included in the read row, and
      writing the two values with storage locations of the two values swapped in the second memory.

7. The computer program according to claim 1, wherein

   the local search is performed using parallel tempering by a plurality of replicas each set with a different temperature parameter value,
   the memory further holds the distance matrix for each of a first replica and a second replica among the plurality of replicas, and
   the first change is calculated based on the distance matrix of the second replica while the distance matrix of the first replica is updated.

8. A data processing apparatus for finding a solution to an assignment problem with local search using an evaluation function representing a cost of an assignment state, the data processing apparatus (10) comprising:

a storage means (11) for holding a flow matrix and a distance matrix, the flow matrix representing flows between a plurality of entities to be assigned to a plurality of destinations, the distance matrix representing distances between the plurality of destinations; and
a processing means (12) for

calculating a first change in the evaluation function using a vector arithmetic operation based on the flow matrix and the distance matrix, the first change being to be caused by a first assignment change of exchanging destinations of a first entity and a second entity among the plurality of entities,
determining based on the first change whether to accept the first assignment change, and
updating, upon determining to accept the first assignment change, the assignment state and updating the distance matrix by swapping two columns or two rows of the distance matrix corresponding to the first entity and the second entity.

9. A data processing method executed by a computer to find a solution to an assignment problem with local search using an evaluation function representing a cost of an assignment state, the data processing method comprising:

calculating a first change in the evaluation function using a vector arithmetic operation based on a flow matrix and a distance matrix stored in a memory, the flow matrix representing flows between a plurality of entities to be assigned to a plurality of destinations, the distance matrix representing distances between the plurality of destinations, the first change being to be caused by a first assignment change of exchanging destinations of a first entity and a second entity among the plurality of entities;
determining based on the first change whether to accept the first assignment change; and
updating, upon determining to accept the first assignment change, the assignment state and updating the distance matrix by swapping two columns or two rows of the distance matrix corresponding to the first entity and the second entity.

$$\mathbf{F} = (f_{i,j}) \in \mathbb{R}^{n \times n} \qquad \mathbf{D} = (d_{k,l}) \in \mathbb{R}^{n \times n} \qquad \phi \qquad \mathbf{X}$$

FACILITIES AND FLOWS

DESTINATIONS AND DISTANCES

SEARCH

ASSIGNMENT

$\phi(1)=2$
$\phi(2)=3$
$\phi(3)=4$
$\phi(4)=1$

ASSIGNMENT STATE
(INTEGER ASSIGNMENT VECTOR $\phi$
OR BINARY STATE MATRIX X)

| $x_{1,1}$ | $x_{1,2}$ | $x_{1,3}$ | $x_{1,4}$ |
|---|---|---|---|
| 0 | 1 | 0 | 0 |
| $x_{2,1}$ | $x_{2,2}$ | $x_{2,3}$ | $x_{2,4}$ |
| 0 | 0 | 1 | 0 |
| $x_{3,1}$ | $x_{3,2}$ | $x_{3,3}$ | $x_{3,4}$ |
| 0 | 0 | 0 | 1 |
| $x_{4,1}$ | $x_{4,2}$ | $x_{4,3}$ | $x_{4,4}$ |
| 1 | 0 | 0 | 0 |

FIG. 1

EP 4 105 837 A1

EXCHANGE DESTINATIONS
OF ENTITIES WITH
IDs = 1 AND 3

$\phi^{(t)}$

| 1 | 2 | 3 | ... | n |
|---|---|---|-----|---|

$\phi^{(t+1)}$

| 3 | 2 | 1 | ... | n |
|---|---|---|-----|---|

$D^{X(t)}$

| $d_{1,1}$ | $d_{1,2}$ | $d_{1,3}$ | ... | $d_{1,n}$ |
|-----------|-----------|-----------|-----|-----------|
| $d_{2,1}$ | $d_{2,2}$ | $d_{2,3}$ | ... | $d_{2,n}$ |
| $d_{3,1}$ | $d_{3,2}$ | $d_{3,3}$ | ... | $d_{3,n}$ |
| ... | ... | ... | ... | ... |
| $d_{n,1}$ | $d_{n,2}$ | $d_{n,3}$ | ... | $d_{n,n}$ |

SWAP 1st
AND 3rd
COLUMNS

$D^{X(t+1)}$

| $d_{1,3}$ | $d_{1,2}$ | $d_{1,1}$ | ... | $d_{1,n}$ |
|-----------|-----------|-----------|-----|-----------|
| $d_{2,3}$ | $d_{2,2}$ | $d_{2,1}$ | ... | $d_{2,n}$ |
| $d_{3,3}$ | $d_{3,2}$ | $d_{3,1}$ | ... | $d_{3,n}$ |
| ... | ... | ... | ... | ... |
| $d_{n,3}$ | $d_{n,2}$ | $d_{n,1}$ | ... | $d_{n,n}$ |

10

DATA PROCESSING APPARATUS

12

PROCESSING
UNIT

11

STORAGE UNIT

| FLOW MATRIX (F) | DISTANCE MATRIX (D) |
|---|---|
| ASSIGNMENT STATE ($\phi$) | STATE-ALIGNED D MATRIX ($D^X$) |

FIG. 2

**H**

**(ΔF)ᵀ**

**ΔD**

| | | | | | | | | | | | | |
|---|---|---|---|---|---|---|---|---|---|---|---|---|
| $h_{1,1}$ | $h_{1,2}$ | $h_{1,3}$ | ... | $h_{1,n}$ | $\begin{matrix}+\\=\end{matrix}$ | $\delta f_1$ | $\times$ | $\delta d_1$ | $\delta d_2$ | $\delta d_3$ | ... | $\delta d_n$ |
| $h_{2,1}$ | $h_{2,2}$ | $h_{2,1}$ | ... | $h_{2,n}$ | $\begin{matrix}+\\=\end{matrix}$ | $\delta f_2$ | $\times$ | $\delta d_1$ | $\delta d_2$ | $\delta d_3$ | ... | $\delta d_n$ |
| $h_{3,1}$ | $h_{3,2}$ | $h_{3,3}$ | ... | $h_{3,n}$ | ⊘ | 0 | ⊘ | $\delta d_1$ | $\delta d_2$ | $\delta d_3$ | ... | $\delta d_n$ |
| ... | ... | ... | ... | ... | ... | ... | ... | ... | ... | ... | ... | ... |
| $h_{n,1}$ | $h_{n,2}$ | $h_{n,3}$ | ... | $h_{n,n}$ | $\begin{matrix}+\\=\end{matrix}$ | $\delta f_n$ | $\times$ | $\delta d_1$ | $\delta d_2$ | $\delta d_3$ | ... | $\delta d_n$ |

# FIG. 3

FIG. 4

---

**Algorithm 1** PT Engine for QAP (32 Parallel Replicas)

---

**Input:** $n, I, C_{BKS}, F, D, B, T^0$
**Output:** $C_{min}, \phi_{min}, \psi_{min}$

1: $T \leftarrow T^0$          ▷ Set initial temperatures
2: **for** $m \leftarrow 1,32$ **do**     ▷ Initialize replica states
3:      replica[$m$].INIT()
4:
5: ▽ Run Optimization
6: **while** $C_{BKS}$ not reached and !TIMEOUT() **do**
7:      #parallel loop threads(32)
8:      **for** $m \leftarrow 1,32$ **do**
9:          replica[$m$].SLS($T[m]$)
10:      PTEXCHANGE($T$)
11: **return** $C_{min}, \phi_{min}, \psi_{min}$
12:
13: ▽ QAP Functions
14: **function** INIT_QAP( )
15:      $\phi \leftarrow$ RANDOM
16:      $C \leftarrow$ init via (1)
17:      $\phi_{min}, C_{min} \leftarrow \phi, C$
18:      If BMS : $H \leftarrow$ init via (31)
19:      If SAM : $D^X \leftarrow$ init via (26)
20:
21: **function** SLS_QAP($T$)
22:      **for** $i \leftarrow 1$ to $I$ **do**
23:          $a,b \leftarrow$ pick 2 unique facilities
24:          $\Delta C_{ex}(a,b) \leftarrow$ (22)
25:          $P_{acc} \leftarrow \exp(-\Delta C_{ex}/T)$
26:          If RANDFLOAT(0,1) $< P_{acc}$ **then**
27:             If BMS : UPDATEH($a,b$) via (33)
28:             If SAM : $D^X_{\cdot,a}, D^X_{\cdot,b} \leftarrow D^X_{\cdot,b}, D^X_{\cdot,a}$
29:             $\phi(a), \phi(b) \leftarrow \phi(b), \phi(a)$
30:             $C \leftarrow C + \Delta C_{ex}$
31:             If $C < C_{min}$ : $\phi_{min}, C_{min} \leftarrow \phi, C$

---

## FIG. 5

START

INITIALIZATION LOOP
i = 0 ; i < M −1 ; i++     S10

INITIAL TEMPERATURE SETTING
T[i]←T⁰[i]     S11

REPLICA INITIALIZATION     S12

INITIALIZATION LOOP     S13

OPTIMIZATION LOOP
i = 0 ; i < M −1 ; i++     S14

REPLICA SEARCH PROCESS     S15

OPTIMIZATION LOOP     S16

REPLICA EXCHANGE PROCESS     S17

S18

NO     COMPLETE SEARCH?

YES

END

FIG. 6

REPLICA INITIALIZATION (QAP)

INITIALIZE $\phi$     S20

CALCULATE INITIAL COST (C)     S21

INITIALIZE MINIMUM VALUES
$C_{min} \leftarrow C$、 $\phi_{min} \leftarrow \phi$     S22

INITIALIZE $\mathbf{D}^X$     S23

RETURN

# FIG. 7

REPLICA SEARCH PROCESS
(QAP)

ITERATION LOOP
$i = 1 ; i < I ; i++$ — S30

SELECT CANDIDATES a AND b FOR
EXCHANGE — S31

CALCULATE $\Delta C_{ex}(a,b)$ — S32

CALCULATE $P_{acc}$ — S33

NO — $P_{acc} > \text{rand}()$? — S34

YES

$D^X_{*,a}, D^X_{*,b} \leftarrow D^X_{*,b}, D^X_{*,a}$ — S35

$\phi(a), \phi(b) \leftarrow \phi(b), \phi(a)$ — S36

$C \leftarrow C + \Delta C_{ex}(a,b)$ — S37

NO — $C < C_{min}$? — S38

YES

$C_{min} \leftarrow C 、 \phi_{min} \leftarrow \phi$ — S39

ITERATION LOOP — S40

RETURN

FIG. 8

**Algorithm 2** QSAP Replica Functions

---

1: **function** INIT_QSAP( )
2: $\quad \psi \leftarrow$ RANDOM
3: $\quad C \leftarrow$ init via (11)
4: $\quad \psi_{min}, C_{min} \leftarrow \psi, C$
5: $\quad$ **if** BMS : $\mathbf{H}^* \leftarrow$ init via (34)
6: $\quad$ **if** SAM : $\mathbf{D}^S \leftarrow$ init via (28)
7:
8: **function** SLS_QSAP($T$)
9: $\quad$ **for** $i \leftarrow 1$ **to** $I$ **do** $\qquad\qquad$ ▷ Relocation Loop
10: $\quad\quad a \leftarrow$ pick facility
11: $\quad\quad l \leftarrow$ pick new location. $\quad l \neq \psi(a)$
12: $\quad\quad \Delta C^*_{rel} \leftarrow$ (25)
13: $\quad\quad P_{acc} \leftarrow \exp(-\Delta C^*_{rel}/T)$
14: $\quad\quad$ **if** RANDFLOAT(0, 1) $< P_{acc}$ **then**
15: $\quad\quad\quad$ **if** BMS : UPDATEH($a, l$) via (38)
16: $\quad\quad\quad$ **if** SAM : $\mathbf{D}^S_{\bullet, a} \leftarrow \mathbf{D}_{\bullet, l}$
17: $\quad\quad\quad \psi(a) \leftarrow l$
18: $\quad\quad\quad C \leftarrow C + \Delta C_{rel}$
19: $\quad\quad\quad$ **if** $C < C_{min}$ : $\psi_{min}, C_{min} \leftarrow \psi, C$
20:
21: $\quad$ **for** $i \leftarrow 1$ **to** $I$ **do** $\qquad\qquad$ ▷ Exchange Loop
22: $\quad\quad a, b \leftarrow$ pick 2 facilities at unique locations
23: $\quad\quad \Delta C^*_{ex} \leftarrow$ (24)
24: $\quad\quad$ **if** $\Delta C^*_{ex} < 0$ **then**
25: $\quad\quad\quad$ **if** BMS : UPDATEH($a, b$) via (36)
26: $\quad\quad\quad$ **if** SAM : $\mathbf{D}^S_{\bullet, a}, \mathbf{D}^S_{\bullet, b} \leftarrow \mathbf{D}^S_{\bullet, b}, \mathbf{D}^S_{\bullet, a}$
27: $\quad\quad\quad \psi(a), \psi(b) \leftarrow \psi(b), \psi(a)$
28: $\quad\quad\quad C \leftarrow C + \Delta C_{ex}$
29: $\quad\quad\quad$ **if** $C < C_{min}$ : $\psi_{min}, C_{min} \leftarrow \psi, C$

---

FIG. 9

```
        ╭─────────────────────────╮
        │  REPLICA INITIALIZATION │
        │        (QSAP)           │
        ╰─────────────────────────╯
                     │
                     ▼
        ┌─────────────────────────┐
        │      INITIALIZE ψ        │────S50
        └─────────────────────────┘
                     │
                     ▼
        ┌─────────────────────────┐
        │ CALCULATE INITIAL COST (C) │────S51
        └─────────────────────────┘
                     │
                     ▼
        ┌─────────────────────────┐
        │ INITIALIZE MINIMUM VALUES│────S52
        │ C_min←C、ψ_min←ψ         │
        └─────────────────────────┘
                     │
                     ▼
        ┌─────────────────────────┐
        │     INITIALIZE D^S       │────S53
        └─────────────────────────┘
                     │
                     ▼
        ╭─────────────────────────╮
        │         RETURN          │
        ╰─────────────────────────╯
```

# FIG. 10

REPLICA SEARCH
PROCESS (QSAP)

ITERATION LOOP
i = 1 ; i < I ; i++    S60

SELECT ENTITY WITH ID=a AND
DESTINATION WITH ID=I    S61

CALCULATE $\Delta C^s_{rel}$    S62

CALCULATE $P_{acc}$    S63

S64
NO    $P_{acc}>rand()$
YES

$D^S_{*,a} \leftarrow D_{*,I}$    S65

$\phi(a)\leftarrow I$    S66

$C\leftarrow C + \Delta C^s_{rel}$    S67

S68
NO    $C<C_{min}?$
YES    S69

$C_{min}\leftarrow C 、 \psi_{min}\leftarrow \psi$

1

1

SELECT CANDIDATES a AND
b FOR EXCHANGE    S70

CALCULATE $\Delta C^s_{ex}$    S71

S72
NO    $\Delta C^s_{ex} < 0?$
YES    S73

$D^S_{*,a}, D^S_{*,b} \leftarrow D^S_{*,b}, D^S_{*,a}$

$\psi(a), \psi(b)\leftarrow \psi(b), \psi(a)$    S74

$C\leftarrow C + \Delta C^s_{ex}$    S75

S76
NO    $C<C_{min}?$
YES    S77

$C_{min}\leftarrow C 、 \psi_{min}\leftarrow \psi$

S78
ITERATION LOOP

RETURN

FIG. 11

FIG. 12

FIG. 13

WITHOUT LOAD BALANCING

REPLICA (T32)

...

REPLICA (T24)

...

REPLICA (T17)

...

REPLICA (T1)

TIME

WITH LOAD BALANCING

REPLICA (T32)

...

REPLICA (T24)

...

REPLICA (T17)

...

REPLICA (T1)

TIME

IDLE

ΔC CALCULATION

ΔC CALCULATION (THE TIME OF ITERATIONS SCALED)

UPDATE PROCESS

FIG. 14

FIG. 15

---

**Algorithm 3** Run Time Measurement Loop

---

1: $\mathbf{F}, \mathbf{D} \leftarrow \text{RAND}(1, 100)$

2: $\phi \leftarrow \text{RANDPERM}(n)$

3: **if** BM$ : $\mathbf{H} \leftarrow$ init via (31)

4: **if** SAM : $\mathbf{D}^{\mathbf{X}} \leftarrow$ init via (26)

5: **for** $i$ in $(1, I_{limit})$ **do**    ▷ timed loop

6:    $a, b \leftarrow$ pick 2 unique facilities

7:    $\Delta C_{r,r} \leftarrow$ (22) via V$\Delta$C, SAM, or BM$

8:    **if** $\text{RANDFLOAT}(0, 1) < PAR$ **then**

9:       **if** BM$ : $\text{UPDATEH}(a, b)$ via (33)

10:       **if** SAM : $\mathbf{D}^{\mathbf{X}}_{*,a}, \mathbf{D}^{\mathbf{X}}_{*,b} \leftarrow \mathbf{D}^{\mathbf{X}}_{*,b}, \mathbf{D}^{\mathbf{X}}_{*,a}$

11:       $\phi(a), \phi(b) \leftarrow \phi(b), \phi(a)$

---

# FIG. 16

FIG. 17

$\triangle$ C GENERATION CIRCUIT
30

FIG. 18

FIG. 19

SWAP 1st AND 3rd
COLUMNS (IN n CYCLES)

FIG. 20

FIG. 21

FIG. 22

FIG. 23

FIG. 24

FIG. 25

ΔC GENERATION CIRCUIT
50

FIG. 26

FIG. 27

ΔC GENERATION CIRCUIT
60

FIG. 28

REPLICA PROCESSING CIRCUIT <u>70</u>

FIG. 29

FIG. 30

90

COMPUTER

91

CPU

92

RAM

93

HDD

BUS

94

GPU

94a

DISPLAY

95

INPUT
INTERFACE

95a

INPUT DEVICE

96

MEDIA
READER

96a

STORAGE
MEDIUM

97

COMMUNICATION
INTERFACE

97a

NETWORK

# FIG. 31

## EUROPEAN SEARCH REPORT

**Application Number**

EP 22 17 9185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BAGHERBEIK MOHAMMAD ET AL: "A Permutational Boltzmann Machine with Parallel Tempering for Solving Combinatorial Optimization Problems", 31 August 2020 (2020-08-31), ARXIV.ORG, CORNELL UNIVERSITY LIBRARY, 201 OLIN LIBRARY CORNELL UNIVERSITY ITHACA, NY 14853, PAGE(S) 317 - 331, XP047560373, [retrieved on 2020-08-31] * section 1, lines 3-8 * * section 2.2, lines 6-10 * * section 4.1 * * section 4.3, line 1 * * section 5.2, lines 5-6 * * algorithm 1 * * equation (1); figure 2b * | 1-9 | INV. G06N3/04 G06N5/00 |
| A | KUMAR MANOJ ET AL: "A comparison of different metaheuristics for the quadratic assignment problem in accelerated systems", APPLIED SOFT COMPUTING, ELSEVIER, AMSTERDAM, NL, vol. 100, 25 November 2020 (2020-11-25), XP086473382, ISSN: 1568-4946, DOI: 10.1016/J.ASOC.2020.106927 [retrieved on 2020-11-25] * the whole document * | 1-9 | TECHNICAL FIELDS SEARCHED (IPC) G06N |

The present search report has been drawn up for all claims

| Place of search | Date of completion of the search | Examiner |
|---|---|---|
| The Hague | 8 November 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210326679

**Non-patent literature cited in the description**

- **EUGENE L. LAWLER.** The quadratic assignment problem. *Management Science,* July 1963, vol. 9 (4), 586-599
- **ROBERT H. SWENDSEN ; JIAN-SHENG WANG.** Replica Monte Carlo simulation of spin-glasses. *Physical Review Letters,* November 1986, vol. 57 (21), 2607-2609
- **K. DABIRI et al.** Replica Exchange MCMC Hardware With Automatic Temperature Selection and Parallel Trial. *IEEE Transactions on Parallel and Distributed Systems,* July 2020, vol. 31 (7), 1681-1692
- A permutational Boltzmann machine with parallel tempering for solving combinatorial optimization problems. **M. BAGHERBEIK et al.** In International Conference on Parallel Problem Solving from Nature. Springer, 2020, 317-331
- **RAINER E. BURKARD ; STEFAN E. KARISCH ; FRANZ RENDL.** QAPLIB - a quadratic assignment problem library. *Journal of Global optimization,* 1997, vol. 10 (4), 391-403
- **GINTARAS PALUBECKIS.** An algorithm for construction of test cases for the quadratic assignment problem. *Informatica, Lith. Acad. Sci.,* 2000, vol. 11 (3), 281-296
- **ZVI DREZNER ; PETER M. HAHN ; ERIC D. TAILLARD.** Recent advances for the quadratic assignment problem with special emphasis on instances that are difficult for meta-heuristic methods. *Annals of Operations research,* 2005, vol. 139 (1), 65-94
- **ALLYSON SILVA ; LEANDRO C. COELHO ; MARYAM DARVISH.** Quadratic assignment problem variants: A survey and an effective parallel memetic iterated tabu search. *European Journal of Operational Research,* 2020
- Hybridization as cooperative parallelism for the quadratic assignment problem. **DANNY MUNERA ; DANIEL DIAZ ; SALVADOR ABREU.** Hybrid Metaheuristics. Springer International Publishing, 2016, 47-61
- **KREŠIMIR MIHIC ; KEVIN RYAN ; ALAN WOOD.** Randomized decomposition solver with the quadratic assignment problem as a case study. *INFORMS Journal on Computing,* 2018, vol. 30 (2), 295-308